# EUROPÄISCHE PATENTSCHRIFT

(11) **EP 3 419 926 B1**
(45) Veröffentlichungstag und Bekanntmachung des Hinweises auf die Patenterteilung: **01.09.2021**
(21) Anmeldenummer: 17716774.9
(22) Anmeldetag: 27.02.2017
(51) Int. Cl.: B66F 9/14, B65G 1/04, B66F 9/07

(54) **TELESKOPANTRIEB, EIN DIESEN UMFASSENDES REGALBEDIENGERÄT SOWIE BETRIEBSVERFAHREN UND VERWENDUNG HIERFÜR**
TELESCOPIC DRIVE, STACKER CRANE COMPRISING SAME AND OPERATING METHOD AND USE THEREFOR
ENTRAÎNEMENT TÉLESCOPIQUE, TRANSTOCKEUR COMPORTANT CELUI-CI ET PROCÉDÉ DE FONCTIONNEMENT AINSI QU'UTILISATION ASSOCIÉS

(30) Priorität: 26.02.2016 DE 102016203134; 25.04.2016 DE 102016206962; 27.04.2016 DE 102016207126; 22.09.2016 DE 102016117941
(43) Veröffentlichungstag der Anmeldung: 02.01.2019
(73) Patentinhaber: Baumüller Nürnberg GmbH, 90482 Nürnberg (DE)
(72) Erfinder: GÖTZ, Fritz Rainer, 73230 Kirchheim unter Teck (DE)
(74) Vertreter: Heilein, Ernst-Peter
(86) Internationale Anmeldenummer: PCT/DE2017/100155
(87) Internationale Veröffentlichungsnummer: WO 2017/144055

(56) Entgegenhaltungen:
- FR-A1- 2 072 159
- JP-A- H0 940 119
- US-A- 5 375 958

## Beschreibung

Die Erfindung betrifft einen Teleskopantrieb, der insbesondere ein Bestandteil eines Regalbediengeräts ist. Vorzugsweise dient der Teleskopantrieb zum Aufnehmen oder Absetzen eines Lagerguts in einem Hochregallager. Die Erfindung betrifft ferner ein Regalbediengerät, insbesondere für ein Hochregallager, mit einem derartigen Teleskopantrieb. Schließlich betrifft die vorliegende Erfindung auch ein Betriebsverfahren sowie eine Verwendung eines solchen Regalbediengeräts.

Zur Zwischenlagerung, zum Vorhalten und/oder zum Kommissionieren von bestimmten Gütern finden verbreitet Hochregallager Verwendung, die Lagergerüste mit entlang einer ersten Horizontalrichtung ausgerichteten Stirnseiten aufweisen. Ein jedes Lagergerüst umfasst eine Anzahl von Lagerfächern, die matrixförmig angeordnet sind und jeweils einen Lagerplatz bereitstellen, beispielsweise für auf einer Europalette abgelegtes Lagergut oder für einen Container. Die Längsseiten der einzelnen Lagergerüste sind zweckmäßigerweise aufeinander zu gerichtet und können zwischen benachbarten Lagergerüsten eine in einer zweiten Horizontalrichtung ausgerichtete Lagergasse begrenzen. Über solche Lagergassen ist es ermöglicht, bestimmte Lagerfächer zu erreichen, beispielsweise mittels eines Hubstaplers und/oder Gabelstaplers. Zur Reduzierung von Personalaufwand werden zunehmend an Stelle von manuell betätigten Hub- oder Gabelstaplern automatisierte Förderfahrzeug-Hebevorrichtungen verwendet, welche innerhalb einer Lagergasse positioniert werden.

Die aus dem Stand der Technik bekannten Förderfahrzeug-Hebevorrichtungen weisen üblicherweise drei Bewegungsfreiheitsgrade auf, nämlich einen Ersten, durch Verfahren des Förderfahrzeugs entlang der Lagergasse, konventionsgemäß als x-Achse bezeichnet, einen Zweiten, durch Heben und Senken einer Hebevorrichtung, als y-Achse bezeichnet, und schließlich einen Dritten, bestehend in einer Bewegung in eine Horizontalrichtung senkrecht zu den beiden anderen Richtungen, insbesondere durch einen Teleskopantrieb, welche gewöhnlich als z-Achse bezeichnet wird und welche die Bewegung beim Be- bzw. Entladen der Lagerfächer beschreibt. Dieser konventionellen Nomenklatur wird auch im vorliegenden Text gefolgt.

Aus den Druckschriften DE 10 2013 114 275 A1 und US 2005/0095095 A1 beispielsweise ist eine Förderfahrzeug-Hebevorrichtung bekannt, die einen über die vollständige Höhe des Lagergerüsts reichenden Vertikalträger aufweist, der in der zweiten Horizontalrichtung entlang des Lagergerüsts verfahrbar ist. An dem Vertikalträger ist mittels eines teleskopierbaren Antriebs ein Hubtisch angebunden, der über die vollständige Vertikalrichtung des Vertikalträgers verfahrbar ist. Die Druckschrift FR2072159 offenbart den Oberbegriff des Anspruchs 1.

Ein daraus oder beispielsweise aus der DE 196 34 216 A1 bekannter teleskopbierbarer Antrieb umfasst meist einen an dem Vertikalträger angebundenen Elektromotor, der Rollen oder eine Kette antreibt. Diese stehen in Wirkverbindung mit dem Hubtisch, sodass dieser senkrecht zur Lagergasse und senkrecht zur Vertikalrichtung, also in die erste Horizontalrichtung, bewegt werden kann. Infolgedessen ist es ermöglicht, mittels des Hubtisches im Wesentlichen jedes Lagerfach des Lagergerüsts anzufahren und ein Lagergut aus dem Lagergerüst zu entnehmen bzw. dort zu deponieren.

Nachteilig hierbei ist, dass die bekannte Förderfahrzeug-Hebeeinrichtung stets nur ein Lagerfach anzufahren vermag.

Hiervon ausgehend liegt der vorliegenden Erfindung die Aufgabe zugrunde, einen gegenüber dem Stand der Technik verbesserten Teleskopantrieb und ein gegenüber dem Stand der Technik verbessertes Regalbediengerät, insbesondere für ein Hochregallager, anzugeben, wobei vorzugsweise ein erhöhter Umschlag von Lagergütern ermöglicht und/oder im Bedarfsfall zusätzliche Lagerkapazität bereit gestellt werden soll.

Hinsichtlich des Teleskopantriebs wird diese Aufgabe durch die Merkmale des Anspruchs 1 und hinsichtlich des Regalbediengeräts sowie ein diesbezügliches Betriebsverfahren nebst Verwendung durch die Merkmale des Anspruchs 11 bzw. 13 oder 14 erfindungsgemäß gelöst. Vorteilhafte Weiterbildungen und Ausgestaltungen, welche jeweils einzeln oder in Kombination miteinander einsetzbar sind, sind Gegenstand der jeweiligen Unteransprüche.

Ein erfindungsgemäßer Teleskopantrieb zeichnet sich zunächst durch eine Basis aus, die eine fest angebundene und in einer ersten Horizontalrichtung verlaufende Zahnstange der Basis umfasst.

Der erfindungsgemäße Teleskopantrieb zeichnet sich darüber hinaus durch wenigstens einen ersten Schlitten aus, der auf der Basis angeordnet und mittels einer Linearführung in der ersten Horizontalrichtung beweglich an der Basis abgestützt ist.

Schließlich umfasst der erste Schlitten erfindungsgemäß einen Zahnriemenantrieb aus zumindest einem Elektromotor und einem mittels des Elektromotors angetriebenen, umlaufenden und zumindest außenverzahnten Zahnriemen, der in der ersten Horizontalrichtung gespannt und auf der Zahnstange der Basis aufgesetzt ist.

Durch den erfindungsgemäßen Teleskopantrieb, bei dem ein erster Schlitten einen Zahnriemenantrieb umfasst, kann die Bauhöhe eines Teleskopantriebs vorteilhaft derart minimiert ausgeführt werden, dass der Teleskopantrieb in ein erfindungsgemäßes Regalbediengerät integriert werden kann.

In einer ersten bevorzugten Ausgestaltung ist auf dem ersten Schlitten wenigstens ein Tisch angeordnet, der mittels einer Linearführung in der ersten Horizontalrichtung beweglich an dem ersten Schlitten abgestützt ist, und an dem eine in der ersten Horizontalrichtung verlaufende Zahnstange des Tisches fest angebunden ist, die auf dem Zahnriemen des Zahnriemenantriebs aufsetzt.

Eine Verschiebung des Zahnriemens durch den Elektromotor des Zahnriemenantriebs verschiebt vorteilhaft den ersten Schlitten mit dem Zahnriemenantrieb gegenüber der Basis um den Betrag einer Verfahrbewegung in die erste Horizontalrichtung von zumindest einer halben Länge der Basis. Gleichzeitig verschiebt sich der Tisch um den gleichen Betrag gegenüber dem ersten Schlitten. Damit kann der Tisch gegenüber der Basis insgesamt vorteilhaft um zumindest eine Länge der Basis verschoben werden, womit der Teleskopantrieb in dieser Ausgestaltung insgesamt eine Erstreckung in erster Horizontalrichtung von zumindest zwei Basislängen aufweist.

In einer zweiten bevorzugten, im Folgenden auch als kaskadierte Ausgestaltung bezeichneten, Ausgestaltung ist zwischen dem ersten Schlitten und einem Tisch wenigstens ein zweiter Schlitten angeordnet, der mittels einer Linearführung in der ersten Horizontalrichtung beweglich an dem ersten Schlitten abgestützt ist; wobei der erste Schlitten an seiner dem Zahnriemenantrieb gegenüberliegenden Seite eine fest angebundene und in der ersten Horizontalrichtung verlaufende Zahnstange umfasst; und wobei der zweite Schlitten einen Zahnriementrieb aus zumindest einem umlaufenden und zumindest außenverzahnten Zahnriemen umfasst, der in der ersten Horizontalrichtung gespannt und auf der Zahnstange des ersten Schlittens aufgesetzt ist.

Indem der erste Schlitten auf seiner dem Zahnriemenantrieb gegenüberliegenden Seite eine fest angebundene Zahnstange umfasst, auf welche der Zahnriementrieb des zweiten Schlittens aufsetzt, kann die Bauhöhe auch eines wenigstens zwei oder mehrere Schlitten umfassenden Teleskopantriebs vorteilhaft derart minimiert ausgeführt werden, dass der Teleskopantrieb in ein erfindungsgemäßes Regalbediengerät integriert werden kann.

In einer Weiterbildung dieser kaskadierten Ausgestaltung ist bevorzugt, wenn zwischen dem zweiten Schlitten und dem Tisch ein dritter Schlitten angeordnet ist, der mittels einer Linearführung in der ersten Horizontalrichtung beweglich an dem zweiten Schlitten abgestützt ist; wobei der zweite Schlitten an seiner dem Zahnriementrieb gegenüberliegenden Seite eine ortsfest angebundene und in der ersten Horizontalrichtung verlaufende Zahnstange umfasst; wobei der dritte Schlitten einen Zahnriementrieb aus zumindest einem umlaufenden und zumindest außenverzahnten Zahnriemen umfasst, der in der ersten Horizontalrichtung gespannt und auf der Zahnstange des zweiten Schlittens aufgesetzt ist; und wobei an dem dritten Schlitten eine in der ersten Horizontalrichtung verlaufende Zahnstange fest angebunden ist, die auf dem Zahnriemen des Zahnriementriebes des zweiten Schlittens aufsetzt.

Auf diese Weise ist eine Kaskadierung des Teleskopantriebs vorteilhaft unter Beibehalt kleiner Bauhöhen ermöglicht, bei der für jede zusätzliche Kaskade der jeweilige Zahnriementrieb eine Zahnstange des nächsten Schlittens oder Tisches bewegt und der Zahnriementrieb des jeweiligen Schlittens von einer Zahnstange des vorhergehenden Schlittens bewegt wird. Vorteilhaft muss hierbei insgesamt nur ein Zahnriemenantrieb vorgesehen werden.

Zweckmäßiger Weise kann auch auf dem zweiten oder dritten Schlitten ein Tisch angeordnet sein, der mittels einer Linearführung in der ersten Horizontalrichtung beweglich an dem zweiten oder dritten Schlitten abgestützt ist, und an dem eine in der ersten Horizontalrichtung verlaufende Zahnstange des Tisches fest angebunden ist, die auf dem Zahnriemen des Zahnriementriebs des zweiten oder dritten Schlittens aufsetzt.

Indem auch am Tisch eine Zahnstange angebunden ist, die auf dem Zahnriemen eines zweiten oder dritten Schlittens aufsetzt, verschiebt sich der Tisch um einen Betrag gegenüber der Basis und trägt so vorteilhaft unmittelbar, d.h. ohne einen weiteren (dritten bzw. vierten ff.) Schlitten vorsehen zu müssen, zur Erstreckung des Teleskopantriebs in erster Horizontalrichtung bei.

Des Weiteren hat sich insbesondere eine Ausgestaltung bewährt, bei der oder die Zahnriemen doppeltverzahnt ausgebildet sind. Die erfindungsgemäß bevorzugte Doppelverzahnung des oder der Zahnriemen kann einerseits eine bessere Kraftübertragung ermöglichen, andererseits gewährleistet sie, durch Vermeidung von Schlupf, eine bessere Positionskontrolle des oder der Zahnriemen bezüglich der jeweils darunter bzw. darüber angeordneten Zahnstangen. Auf diese Weise kann die Verfahrbewegung des Teleskopantriebs in der ersten Horizontalrichtung vorteilhaft positionsgenau vollzogen werden.

Darüber hinaus kann die Länge der Verfahrbewegung in der ersten Horizontalrichtung, also der Hub des Teleskopantriebs, deutlich größer ausfallen, als wenn der oder die Schlitten und/oder Tisch direkt mit einem ausschließlich innenverzahnten Zahnriemen verbunden ist.

Darüber hinaus hat sich bewährt, dass der oder die Zahnriemen jeweils mittels zweier drehbar gelagerter Zahnriemenräder gespannt sind und die Drehachsen der Zahnriemenräder in einer zweiten Horizontalrichtung, insbesondere senkrecht zur ersten Horizontalrichtung, verlaufen.

Eine solche Anordnung erlaubt vorteilhaft die Kopplung der Drehachse des anzutreibenden Zahnriemenrades des Zahnriemenantriebs unmittelbar mit der Welle eines Elektromotors ohne Zwischenschaltung von Umlenkmitteln.

Dementsprechend ist in einer bevorzugten Ausgestaltung die Welle des Elektromotors fluchtend oder in einer alternativen Ausgestaltung dazu unter einem Winkel von insb. 90° und Zwischenschaltung von den Winkel ausgleichenden Umlenkmitteln wie insb. Kegelzahnräder zur Drehachse eines elektromotorisch angetriebenen Zahnriemenrades angeordnet.

Die Anordnung des Elektromotors unter einem Winkel von insb. 90° zur Drehachse des anzutreibenden Zahnriemenrades des Zahnriemenantriebs schafft vorteilhaft wertvollen Bauraum insb. auf der motorabgewandten Seite für die beim bevorzugt kaskadierten Aufbau eines Teleskopantriebs erforderlichen Zahnriementriebe.

Erfindungsgemäß bevorzugt ist darüber hinaus eine Ausgestaltung, bei der ggf. zwei Teleskopantriebe zueinander parallel zu einem Tandem angeordnet sind, wobei zumindest der Zahnriemenantrieb eines, vorzugsweise beider, Teleskopantriebe an einer, vorzugsweise gemeinsamen, Welle eines Elektromotors, insbesondere über eines der Zahnriemenräder, angebunden ist.

Die parallele Anordnung zweier, vorzugsweise über eine gemeinsame Welle angetriebener, Teleskopantriebe erlaubt die Ausgestaltung eines Teleskopantriebs als sog. Teleskopgabel, vorteilhaft angetrieben mit nur einem Elektromotor. Lagergüter wie insbesondere Container, deren Kufen keine durchgängige Aussparung am Boden, sondern eine Aussparung mit Zwischenstrebe aufweisen, insbesondere Europaletten, lassen sich so ebenso problemlos wie sicher aufnehmen und bewegen.

Darüber hinaus hat es sich bewährt, dass sich die Zahnstangen entlang der vollständigen Länge der Basis in der ersten Horizontalrichtung erstrecken, deren Länge zur Länge der Schlitten und ggf. des Tisches in der ersten Horizontalrichtung korrespondiert.

Somit ergibt sich die Gesamtlänge der Verfahrbewegung eines Teleskopantriebs in die erste Horizontalrichtung, also der Gesamthub des Teleskopantriebs durch Addition der Längen aller möglichen Verfahrbewegungen in diese erste Horizontalrichtung. Sie kann vorteilhaft dadurch maximiert werden, dass alle Bauteile, also die Zahnstangen, die Zahnriemen, die Schlitten, ggf. ein Tisch, und die Basis, die innerhalb des jeweiligen Regalbediengeräts maximal mögliche Länge aufweisen.

Schließlich ist in einer Ausgestaltung bevorzugt, dass der oder die Schlitten in der ersten Horizontalrichtung mittels des oder der Zahnriemen beidseitig der Basis, also sowohl in positiver als auch in negativer ersten Horizontalrichtung, verfahrbar sind.

Die beidseitige Verfahrbarkeit, sowohl in positiver als auch in negativer erster Horizontalrichtung, hat zum Vorteil, dass mittels des Teleskopantriebs Lagergut in Lagerfächer auf beiden Seiten einer Lagergasse verbracht bzw. daraus aufgenommen werden kann. Außerdem ermöglicht die beidseitige Verfahrbarkeit in erster Horizontalrichtung vorteilhaft ein direktes Umsetzen von Lagergütern über die Lagergasse hinweg, ohne dass das Lagergut zwischenzeitlich abgesetzt werden muss.

Die vorliegende Erfindung betrifft auch ein Regalbediengerät, insbesondere für ein Hochregallager, mit mindestens einer zumindest in einer zweiten Horizontalrichtung und einer Vertikalrichtung elektromotorisch angetriebenen, in einer dreidimensionalen Fächermatrix des Regalbediengerätes geführten Kabine, die zur Aufnahme eines Lagerguts einen Teleskopantrieb nach einem der vorherigen Ansprüche aufweist.

Die Möglichkeit, den Teleskopantrieb innerhalb der Kabine mittels eines Regalbediengeräts zumindest auch in Vertikalrichtung verfahren zu können, ermöglicht vorteilhaft insbesondere ein Heben und Senken und damit bei ausgefahrenem Teleskopantrieb das Aufnehmen bzw. Absetzen von Lagergut aus einem bzw. in ein Lagerfach. Die Kombination von Verfahrbewegungen der Kabine in die Vertikal- und in die zweite Horizontalrichtung erlaubt bei eingefahrenem Teleskopantrieb zudem den Transport des Lagerguts innerhalb einer Lagergasse zu jedem beliebigen Lagerfach.

Ein solches Regalbediengerät ist besonders bevorzugt geeignet für ein Hochregallager und beispielsweise ein Bestandteil eines Hochregallagers. Die Erfindung betrifft somit ferner auch ein Hochregallager mit einem derartigen Regalbediengerät. Das Hochregallager umfasst vorzugsweise ein Lagergerüst mit einer Anzahl an, in drei Raumdimensionen, also dreidimensional, matrixförmig angeordneten Lagerfächern. Längsseitig zu dem Lagergerüst ist beispielsweise das Regalbediengerät angeordnet, welches vorzugsweise ebenfalls zu einer sich in drei Raumdimensionen erstreckenden, also dreidimensionalen Fächermatrix angeordnete Gerüstfächer umfasst, innerhalb derer beispielsweise eine Kabine verfahrbar ist. Die Kabine ist in einer Vertikalrichtung, also lotrecht, und in einer zweiten Horizontalrichtung elektromotorisch angetrieben. Die elektromotorisch angetriebene Kabine weist einen Teleskopantrieb zur Aufnahme eines Lagerguts auf. Der Teleskopantrieb selbst umfasst eine Basis und einen darauf angeordneten ersten Schlitten, der mittels einer Linearführung in einer ersten Horizontalrichtung beweglich an der Basis abgestützt ist. Ferner umfasst der erste Schlitten einen angetriebenen, umlaufenden und zumindest außen verzahnten Zahnriemen, der in erster Horizontalrichtung gespannt und auf eine ortsfest an der Basis angebundene und in erster Horizontalrichtung verlaufende Zahnstange aufgesetzt ist.

Die Basis selbst ist zweckmäßigerweise an einem Boden der Kabine angebunden. Bei Betrieb des ersten Schlittens wird dieser vorzugsweise in erster Horizontalrichtung überstehend zu dem Boden der Kabine verbracht, so dass der Schlitten zumindest teilweise in ein Lagerfach des Lagergerüstes des Hochregallagers hineinragt. Auf diese Weise ist es ermöglicht, das Lagergut in das Lagerfach einzubringen oder diesem zu entnehmen. Die zweite Horizontalrichtung, in die die Kabine elektromotorisch angetrieben ist, ist senkrecht zur ersten Horizontalrichtung, in die der Zahnriemen gespannt ist und in die der erste Schlitten bezüglich der Basis verbracht werden kann. Insbesondere ist das Lagergerüst im Montagezustand in zweiter Horizontalrichtung benachbart zu dem Regalbediengerät angeordnet.

Vorzugsweise ist das Regalbediengerät gemäß einem Verfahren betrieben, bei dem zum Aufnehmen oder Absetzen eines Lagerguts auf den Teleskopantrieb, insbesondere auf einen Tisch, sofern dieser vorhanden ist, die Kabine in der Vertikalrichtung verfahren wird. Zum Aufnehmen werden hierbei insbesondere zunächst der erste Schlitten, und der Tisch, sofern dieser vorhanden ist, in erster Horizontalrichtung bezüglich der Basis beabstandet und folglich somit in ein Lagerfach verbracht. Hierbei wird als Lagergut vorzugsweise ein Container mit einem auf zwei Kufen gestützten Containerkörper herangezogen, wobei der Tisch oder auch ein zweiter oder weiterer Schlitten, sofern dieser vorhanden ist, oder zumindest der erste Schlitten, zwischen die beiden Kufen unterhalb des Körpers des Containers verfahren wird. Mittels Bewegen der Kabine in Vertikalrichtung, insbesondere nach oben, wird folglich der Teleskopantrieb mit der Unterseite des Containerkörpers, die sich zwischen den beiden Kufen befindet, in mechanischen Kontakt gebracht und somit der Container angehoben. Im Anschluss hieran wird der Zahnriemen angetrieben und folglich das Lagergut in eine sich in Vertikalrichtung oberhalb der Basis befindende Position verbracht.

Zum Absetzen wird zunächst das sich auf dem Tisch in Vertikalrichtung oberhalb der Basis befindende Lagergut zunächst mittels geeigneten Antriebs des Zahnriemens, eines Zahnriemenantriebs, in das Lagerfach in erster Horizontalrichtung verbracht. Mittels Bewegen der Kabine in Vertikalrichtung, insbesondere nach unten, wird das Lagergut in Kontakt mit einem Boden des Lagerfachs gebracht. Bei einer weiteren Bewegung der Kabine in Vertikalrichtung wird der mechanische Kontakt zwischen dem Teleskopantrieb und dem Lagergut gelöst. Sobald dies erfolgt ist, wird insbesondere der Zahnriemen des Zahnriemenantriebs erneut angetrieben und folglich der Teleskopantrieb eingefahren, wofür insbesondere der Tisch, ein zweiter oder weiterer Schlitten (soweit vorhanden) oder zumindest der erste Schlitten, erneut in eine Position in Vertikalrichtung oberhalb der Basis verbracht wird. Vorzugsweise sind der erste Schlitten sowie ggf. weitere Schlitten und/oder der Tisch in erster Horizontalrichtung bezüglich der Basis beidseitig verfahrbar. Auf diese Weise ist es ermöglicht, mittels eines einzigen Regalbediengerätes zwei Lagergerüste zu bedienen, die bezüglich des Regalbediengeräts in zweiter Horizontalrichtung beidseitig des Regalbediengeräts positioniert sind. Mit anderen Worten befindet sich das Regalbediengerät in einer sogenannten Lagergasse zwischen zwei Lagergerüsten, die mit demselben Regalbediengerät bedient werden können. Somit ist lediglich ein einziges Regalbediengerät für wenigstens zwei Lagergerüste erforderlich, was Herstellungskosten reduziert. Sofern hierbei das Regalbediengerät eine Anzahl von Kabinen mit jeweils einem Teleskopantrieb umfasst, ist trotz der Verwendung lediglich eines einzigen Regalbediengeräts eine vergleichsweise schnelle Ein- bzw. Auslagerung von einer Vielzahl von Lagergütern ermöglicht.

Erfindungsgemäß bevorzugt kann die Versorgung des Elektromotors des Zahnriemenantriebs des Teleskopantriebs mit Elektrizität mittels wenigstens eines in der Kabine angeordneten wieder-aufladbaren Stromspeichers sichergestellt werden, welcher in gesonderten Ladestationen und/oder bevorzugt
- bei Stillstand der Kabine über wenigstens eine Steckverbindung aus der Stromversorgung des Regalbediengeräts,
und/oder
- während der Verfahrbewegungen der Kabine mittels wenigstens eines in Drehung versetzten Dynamos, vorzugsweise mittels wenigstens eines in einer der Laufrollen der Kabine angeordneten Nabendynamos,
aufgeladen wird;
wobei die Versorgung des Elektromotors mit Strom beispielsweise über eine den Motor mit dem Stromspeicher verbindende, vorzugsweise in einer Energieführungskette geführten, Stromleitung erfolgen kann.

Die Stromversorgung des Elektromotors des Teleskopantriebs beispielsweise über eine Stromleitung, welche insbesondere mit Hilfe einer sog. Energieführungskette geführt ist, mit einem in der Kabine angeordneten wieder-aufladbaren Stromspeicher stellt dabei eine konstruktionstechnisch vergleichsweise einfache wie günstige Lösung dar, wobei der Stromspeicher in gesonderten Ladestationen und/oder bevorzugt bei Stillstand der Kabine über wenigstens eine Steckverbindung aus der Stromversorgung des Regalbediengeräts, und/oder während der Verfahrbewegungen der Kabine mittels wenigstens eines in Drehung versetzten Dynamos, vorzugsweise mittels wenigstens eines in einer der Laufrollen der Kabine angeordneten Nabendynamos, aufgeladen werden kann; und wobei der Stromspeicher im erstgenannten Fall vorzugsweise eine größere Stromspeicherkapazität aufweist als in der Ausgestaltung mit Nabendynamos, auch wenn damit ein etwas größerer Platzbedarf einhergehen sollte.

Darüber hinaus betrifft die vorliegende Erfindung auch ein Verfahren zum Betrieb eines Regalbediengeräts, bei dem eine Verfahrbewegung der Kabine in Vertikalrichtung ein Aufnehmen oder Absetzen des Lagerguts mittels eines das Lagergut hinreichend untergreifenden Teleskopantriebs bewirkt.

Indem eine Verfahrbewegung des in der Kabine angeordneten Teleskopantriebs in Vertikalrichtung mittels der im Regalbediengerät verfahrbaren Kabine selbst erfolgt, ist vorteilhaft ein Heben und Senken und damit bei ausgefahrenem Teleskopantrieb das Aufnehmen bzw. Absetzen des Lagerguts aus einem bzw. in ein Lagerfach bewirkt, ohne dass ein eigenständiger Vertikalantrieb für den Teleskopantriebs benötigt wird. Vielmehr kann dieser durch Ausnutzung der Bewegungsmöglichkeiten der Kabine eingespart werden.

Schließlich beansprucht die vorliegende Erfindung auch eine Verwendung eines erfindungsgemäßen Regalbediengeräts, wobei das Regalbediengerät eine Vielzahl an Kabinen umfasst, welche zumindest ein temporäres Zwischenlagern von Lagergut im Regalbediengerät gestatten.

Je höher nämlich die Anzahl der zeitgleich in einem Regalbediengerät bewegbaren Kabinen ist, desto höher kann der Umschlag an Lagergütern grundsätzlich sein. Darüber hinaus bietet die parallele Verwendung mehrerer Kabinen zudem den Vorteil, einerseits im Störungsfall einer Kabine jederzeit auf alternative Kabinen rückgreifen und damit einen Parallelbetrieb realisieren zu können, welche andererseits, nicht nur aber zumindest temporärer, als Zwischenlagerplatz dienen können.

Zusammenfassend stellt die vorliegende Erfindung einen Teleskopantrieb, ein diesen umfassendes Regalbediengerät sowie ein Betriebsverfahren und eine Verwendung hierfür bereit, mit einer Basis, welche eine fest angebundene, in einer ersten Horizontalrichtung verlaufende Zahnstange umfasst; und mit wenigstens einem auf der Basis angeordneten ersten Schlitten, welcher mittels einer Linearführung in der ersten Horizontalrichtung beweglich an der Basis abgestützt ist; und welcher einen Zahnriemenantrieb aus zumindest einem Elektromotor und einem damit angetriebenen, umlaufenden Zahnriemen, der in der ersten Horizontalrichtung gespannt und auf der Zahnstange der Basis aufgesetzt ist, umfasst.

Durch Integration des Teleskopantriebs in eine, innerhalb einer dreidimensionalen Fächermatrix eines Gerätegerüsts elektromotorisch verfahrbaren Kabine, sind nicht nur ein kompakter Aufbau sondern Bewegungen eines Lagerguts, die bis oder bevorzugt auch über die Erstreckung eines einzelnen Lagerfachs hinausgehen und damit eine Übergabe des Lagerguts zu einem anderen Regalbediengerät in einer benachbarten parallelen Lagergasse, ermöglicht.

In der bevorzugt übergreifenden Ausgestaltung kann somit Lagergut vorteilhaft über eine Reihe von Lagerfächern hinweg übergeben und die Geschwindigkeit der Verteilung von Lagergütern, also deren Umschlag in einem Hochregallager vorteilhaft erhöht werden. Durch Erhöhung der Zahl der zeitgleich in einem Regalbediengerät bewegten Kabinen lassen sich schließlich der Umschlag von Lagergütern pro Zeiteinheit und/oder die Lagerkapazität des Hochregallagers bei gleichem Platzbedarf im Bedarfsfall zumindest zeitweise erhöhen.

Weitere Vorteile und Ausgestaltungen werden nachfolgend anhand bevorzugter Ausführungsbeispiele der Erfindung, sowie in Verbindung mit der Zeichnung, näher erläutert.

Darin zeigen schematisch:
- Fig. 1a: in einer Draufsicht ein erstes Beispiel eines Hochregallagers mit Lagergerüsten, und mit jeweils ein Gerätegerüst aufweisenden Regalbediengeräten, wobei das Hochregallager immer abwechselnd ein Lagergerüst und eine Lagergasse mit darin angeordnetem Regalbediengerät aufweist;
- Fig. 1b: in einer Draufsicht ein zweites Beispiel eines Hochregallagers mit Lagergerüsten, und mit jeweils ein Gerätegerüst aufweisenden Regalbediengeräten, wobei das Hochregallager immer abwechselnd zwei einander benachbarte Lagergerüste und eine Lagergasse mit darin angeordnetem Regalbediengerät aufweist;
- Fig. 2a: in einer Seitenansicht eines der Lagergerüste mit darin aufgenommenem Lagergut;
- Fig. 2b: in einer Seitenansicht eines der Gerätegerüste und darin geführten Kabinen;
- Fig. 3a: in einem vereinfachten perspektivischen Ausschnitt Lagergerüste und Regalbediengeräte eines Hochregallagers analog Fig. 1;
- Fig. 3b: in einem vereinfachten perspektivischen Ausschnitt Lagergerüste und Regalbediengeräte eines Hochregallagers analog Fig. 2;
- Fig. 4: in einer Vorderansicht ein typisches Lagergut zur Lagerung in einem Hochregallager;
- Fig. 5: in einer Seitenansicht ein erstes Ausführungsbeispiel eines Teleskopantriebs einer der Kabinen;
- Fig. 6: den Teleskopantrieb aus Fig. 5 in einer um 90° gedrehten Schnittdarstellung;
- Fig. 7a: in einer Seitenansicht den Teleskopantrieb aus Fig. 5 in einem mittels seines Zahnriemenantriebs ausgefahrenen Zustand;
- Fig. 7b: den Teleskopantrieb aus Fig. 7a in einer Draufsicht;
- Fig. 8a: in einer Seitenansicht den ausgefahrenen Teleskopantrieb aus Fig. 5 im Moment eines soeben erfolgten Absetzens eines typischen Lagerguts;
- Fig. 8b: den ausgefahrenen Teleskopantrieb aus Fig. 8a in einer Draufsicht;
- Fig. 9a: in einer Seitenansicht den ausgefahrenen Teleskopantrieb aus Fig. 5 im Moment des Anhebens eines typischen Lagerguts;
- Fig. 9b: den ausgefahrenen Teleskopantrieb aus Fig. 9a in einer Draufsicht;
- Fig. 10a: in einer Seitenansicht ein zweites Ausführungsbeispiel eines kaskadiert aufgebauten Teleskopantriebs einer der Kabinen; und
- Fig. 10b: den Teleskopantrieb aus Fig. 10a in einer Draufsicht;
- Fig. 11: in einer Seitenansicht ein drittes Ausführungsbeispiel eines Teleskopantriebs einer der Kabinen; und
- Fig. 12: in einer Seitenansicht ein viertes Ausführungsbeispiel eines kaskadiert ausgebildeten Teleskopantriebs einer der Kabinen.

Bei der nachfolgenden Beschreibung bevorzugter Ausführungsformen der vorliegenden Erfindung bezeichnen gleiche Bezugszeichen gleiche oder vergleichbare Komponenten.

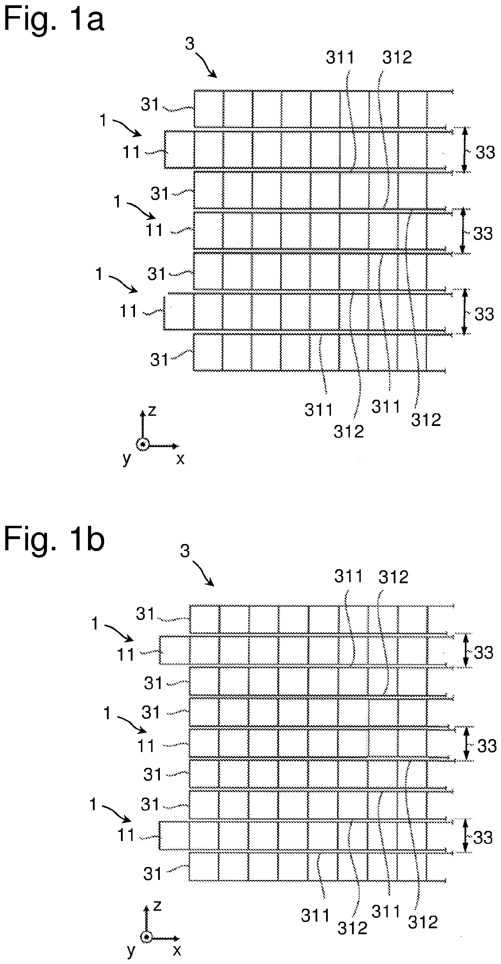

Fig. 1a zeigt ausschnittsweise in einer Draufsicht ein erstes Beispiel eines Hochregallagers 3 mit Lagergerüsten 31, und mit jeweils ein Gerätegerüst 11 aufweisenden Regalbediengeräten 1, wobei das Hochregallager 3 immer abwechselnd ein Lagergerüst 31 und eine Lagergasse 33 mit darin angeordnetem Regalbediengerät 1 aufweist. Beispielhaft sind vier Lagergerüste 31 dargestellt, die mit ihren Stirnseiten 313 entlang einer ersten Horizontalrichtung Z aufgereiht sind und in eine zweite Horizontalrichtung X verlaufen, die senkrecht zur ersten Horizontalrichtung Z ist. Zwischen benachbarten Lagergerüsten 31 ist in der zweiten Horizontalrichtung X jeweils eine Lagergasse 33 gebildet, innerhalb derer jeweils ein Regalbediengerät 1 angeordnet ist. Jedes der Lagergerüste 31 weist eine erste Seite 311 und eine zweite Seite 312 auf, die jeweils die längsseitige Begrenzung des Lagergerüsts 31 entlang einer zweiten Horizontalrichtung X bilden. Jedes Lagergerüst 31 lässt sich, im hier dargestellten Beispiel, sowohl über die erste Seite 311 als auch über die zweite Seite 321, welche jeweils in der ersten Horizontalrichtung Z offen ausgestaltet sind, mittels des Regalbediengeräts 1 direkt be- bzw. entladen.

Fig. 1b zeigt in einer Draufsicht ein zweites Beispiel eines Hochregallagers 3 mit Lagergerüsten 31, und mit jeweils ein Gerätegerüst 11 aufweisenden Regalbediengeräten 1, wobei das Hochregallager 3 immer abwechselnd zwei einander benachbarte Lagergerüste 31 und eine Lagergasse 33 mit darin angeordnetem Regalbediengerät 1 aufweist. In dieser Ausgestaltung ist ein direktes Be- bzw. Entladen der Lagergerüste 31 nur noch über jeweils eine der Seiten 311 oder 312 möglich, nämlich über diejenige, die zu einer Lagergasse 33 zeigt - die Lagerkapazität eines solchen Hochregallagers 3 ist jedoch gegenüber dem aus Fig. 1 deutlich erhöht.

In einer speziellen Ausgestaltung eines erfindungsgemäß bevorzugten, in das Regalbediengerät 1 integrierten, Teleskopantriebs 2 ist zudem vorteilhaft die Übergabe des Lagerguts 4 über zwei benachbarte Lagergerüste 31 hinweg ermöglicht, was so gleiche Belade-/ Entlade-Funktionalität bei einer deutlich geringeren Zahl benötigter Regalbediengeräte 1 ermöglicht.

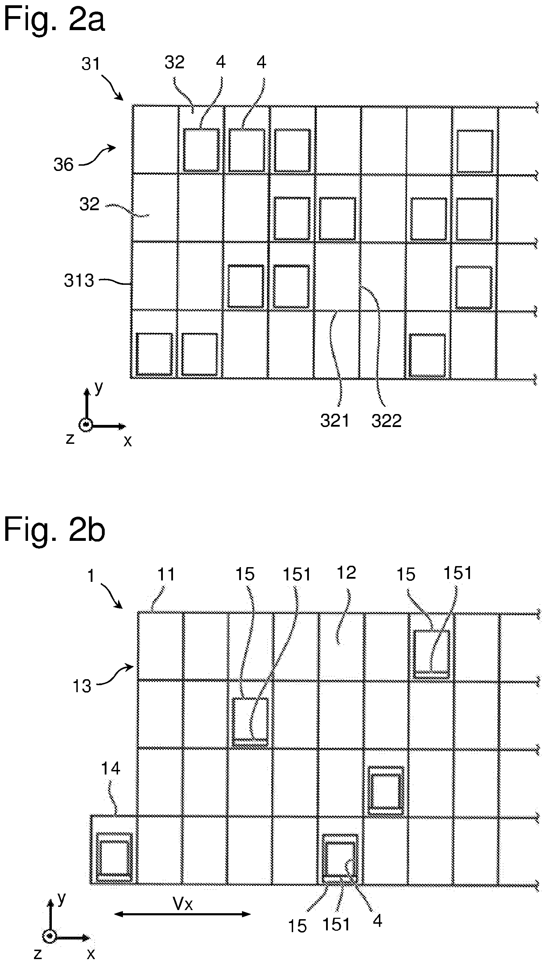

**Fig. 2a** und **Fig. 2b** zeigen jeweils in einer Seitenansicht eines der Lagergerüste 31 mit darin aufgenommenem Lagergut 4 (Fig. 2a) bzw. eines der Gerätegerüste 11 und darin geführten Kabinen 15 (Fig. 2b). Das Lagergerüst 31 weist zu einer dreidimensionalen Fächermatrix 36 angeordnete Lagerfächer 32 auf, welche entlang einer zweiten Horizontalrichtung X, sowie einer Vertikalrichtung Y, nebeneinander zu einer dreidimensionalen Fächermatrix 36 des Lagergerüsts 31 angeordnet sind. Die Lagerfächer 32 sind vorzugsweise gleichartig ausgestaltet und beispielsweise mittels in erster Z und zweiter X Horizontalrichtung sowie in Vertikalrichtung Y verlaufender Streben 322 gebildet. Innerhalb der Lagerfächer 32 ist teilweise Lagergut 28 (Fig. 2a) positioniert bzw. positionierbar, beispielsweise über das Gerätegerüst 11 eines Regalbediengeräts 1. Ein solches, in Fig. 2b dargestelltes, Gerätegerüst 11 weist dementsprechend eine Anzahl an Gerüstfächern 12 auf, die jeweils vorzugsweise quaderförmig und gleichartig ausgestaltet entlang der zweiten Horizontalrichtung X, sowie der Vertikalrichtung Y, nebeneinander angeordnet eine sich in drei Raumdimensionen erstreckende, also dreidimensionale Fächermatrix 13 des Regalbediengeräts 1 bilden.

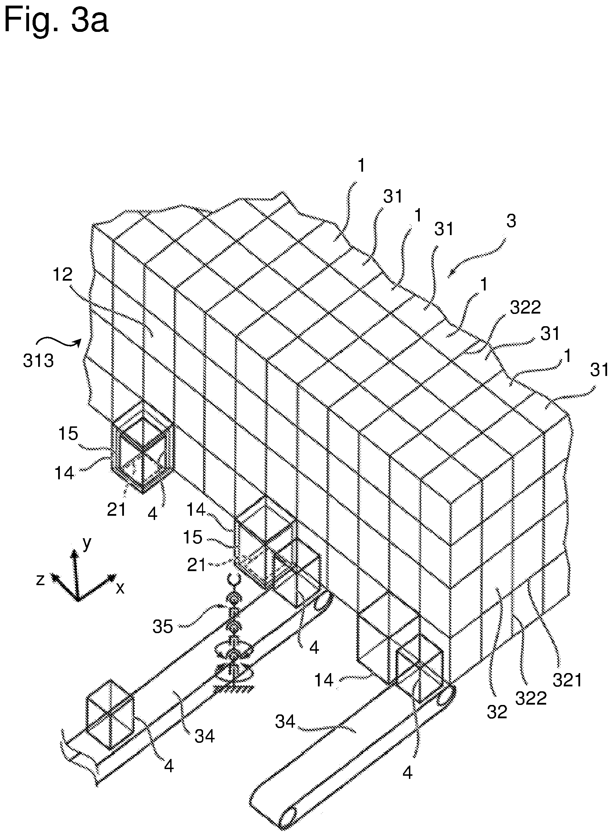

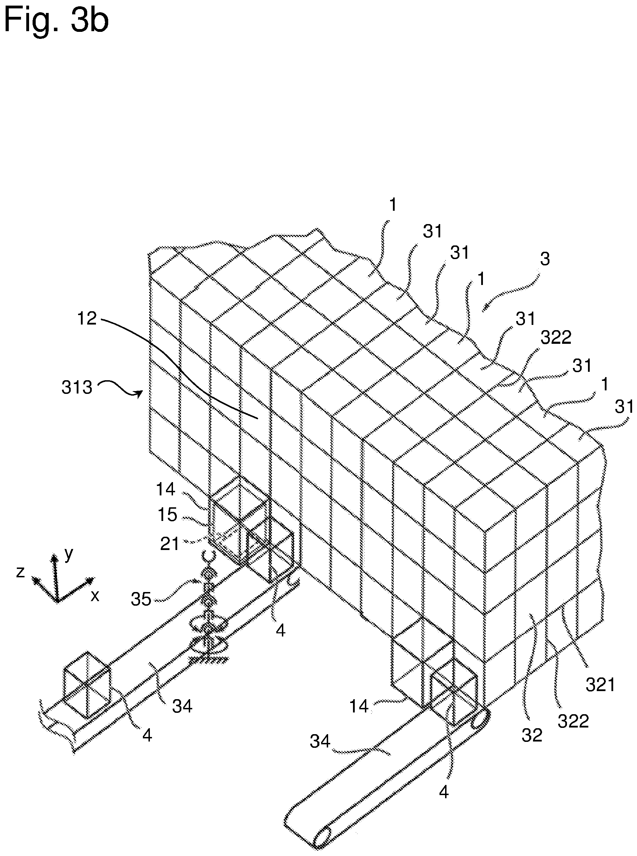

An die dreidimensionale Fächermatrix 13 des Gerätegerüsts 11 kann darüber hinaus ein Ladefach 14 (vgl. auch Fig. 3a und 3b) angefügt sein, welches vorzugsweise gleichartig zu den Gerüstfächern 12 aufgebaut ist, über welches Lagergut 4 dem Regalbediengerät 1 zugeführt und/oder aus diesem abgeführt werden kann. Innerhalb der Gerüstfächer 12 bzw. des Ladefachs 14 ist bei Bedarf eine Kabine 15 positioniert bzw. positionierbar, die bei Bedarf ein Lagergut 4 enthält. Die Kabine 15 selbst ist insbesondere elektromotorisch angetrieben, wobei beispielsweise jede Kabine 15 zwei Zahnstangen aufweist, von denen eine in der zweiten Horizontalrichtung X und die verbleibende in Vertikalrichtung Y verläuft. Vorzugsweise sind im Gerätegerüst 11 mehrere, elektromotorisch bewegliche Kabinen 15 mit einem Kabinenboden 151 angeordnet, welche entlang der zweiten Horizontalrichtung X und der Vertikalrichtung Y verfahrbar sind.

Dazu weist jedes der Gerüstfächer 12 vorzugsweise zwei nicht dargestellte, elektromotorisch angetriebene Zahnriemen auf, von denen einer ebenfalls in zweiter Horizontalrichtung X und der andere in Vertikalrichtung Y verläuft. Sofern eine der Zahnstangen der Kabine 15 in Eingriff mit dem jeweiligen Zahnriemen ist, und dieser angetrieben wird, wird folglich die Kabine 15 in die jeweilige Richtung X oder Y bis zum nächsten Gerüstfach 12 und zu dessen Zahnriemen bewegt. Somit ist eine jede Kabine 15 elektromotorisch angetrieben innerhalb der dreidimensionalen Fächermatrix 13 von jedem Gerüstfach 12 aus in die zweite Horizontalrichtung X und in die Vertikalrichtung Y verfahrbar. Zweckmäßigerweise weist das Regalbediengerät 1 eine Anzahl gleichartiger Kabinen 15 auf, die unabhängig voneinander verfahren werden können.

**Fig. 3a** und **Fig. 3b** zeigen jeweils in einem vereinfachten perspektivischen Ausschnitt Lagergerüste 31 und Regalbediengeräte 1 eines Hochregallagers 3 analog Fig. la bzw. 1b, wobei in der ersten Variante (Fig. 3a) das Hochregallager 3 immer abwechselnd ein Lagergerüst 31 und ein, in einer Lagergasse 33 angeordnetes Regalbediengerät 1, und in der zweiten Variante (Fig. 3b) das Hochregallager 3 immer abwechselnd zwei einander benachbarte Lagergerüste 31 und ein in einer Lagergasse 33 angeordnetes Regalbediengerät 1, aufweist.

Die Lagergerüste 31 weisen die einzelnen Lagerfächer 32 auf, deren Kanten mittels der Streben 322 gebildet sind, die in einem rechten Winkel zueinander angeordnet sind. Benachbart wenigstens einer Seite 311 oder 312 eines jeden Lagergerüsts 31 ist ein Regalbediengerät 1 angeordnet. Das Regalbediengerät 1 ist durch das Gerätegerüst 11 gebildet, welches die Gerüstfächer 12 umfasst. Die Gerüstfächer 12 sind jeweils quaderförmig und gleichartig ausgestaltet. Zudem sind die Gerüstfächer 12 zu einer dreidimensionalen Fächermatrix 13 angeordnet, die in den gezeigten Beispielen mehrere Zeilen (Ebenen) und mehrere Spalten umfasst. Im Montagezustand ist das Gerätegerüst 11 auf wenigstens eine Seite 311 und/oder 312 eines jeden Lagergerüsts 31 aufgesetzt und an diesem befestigt. Die Anzahl sowie die Anordnung der Gerüstfächer 11 entspricht der Anzahl bzw. Anordnung der Lagerfächer 32. Mit anderen Worten weist das Lagergerüst 31 ebenfalls mehrere Spalten und mehrere Zeilen sowie Ebenen auf. Auch entspricht die Größe der Lagerfächer 32 in der zweiten Horizontalrichtung X sowie der Vertikalrichtung Y im Wesentlichen der der Gerüstfächer 12, so dass jedem der Lagerfächer 32 des Lagergerüsts 31 eines der Gerüstfächer 12 zugeordnet ist, welches sich in erster Horizontalrichtung Z im Wesentlichen an das jeweilige Lagerfach 32 anschließt und mit diesem beispielsweise fluchtet.

Jede der Kabinen 15 umfasst einen lediglich schematisch dargestellten Teleskopantrieb 2, der sich an dem Kabinenboden 151 der jeweiligen Kabine 15 befindet. Mittels des Teleskopantriebs 2 lässt sich in der jeweiligen Kabine 15 befindendes Lagergut 4 in das zugeordnete Lagerfach 32 einbringen oder von diesem in die Kabine 15 entnehmen.

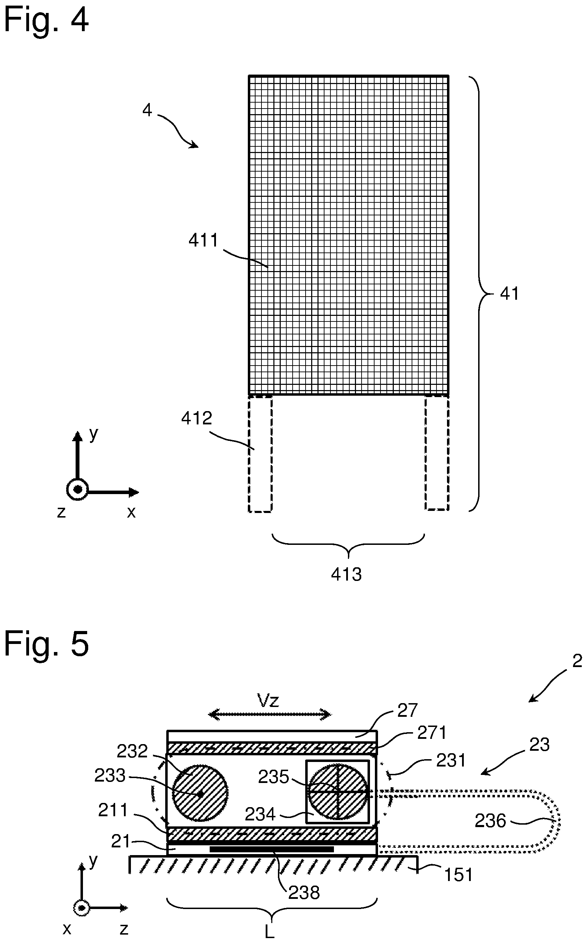

Der Teleskopantrieb 2 dient somit insbesondere dem Versetzen eines Lagerguts 4 oder vergleichbaren Gegenstands, wobei zumindest ein Bestandteil des Teleskopantriebs 2 hierbei fest auf einer Basis 21, beispielsweise der einer Kabine 15, verbleibt. Geeigneter Weise ist der Teleskopantrieb 2 ein Bestandteil eines Regalbediengeräts 1 und dient bevorzugt dem Versetzen von typischerweise für ein Hochregallager 3 ausgelegtes Lagergut 4 (siehe Fig. 4). Hierbei wird beispielsweise mittels des Teleskopantriebs 2 das Lagergut 4 in ein Lagerfach 32 eines Lagergerüsts 31 eines Hochregallagers 3 verbracht. Vorzugsweise verbleibt ein Bestandteil des Regalbediengeräts 1 ortsfest, wobei der Teleskopantrieb 2 geeigneter Weise nicht an diesem Teil des Regalbediengeräts 1 sondern bevorzugt an der Basis 21 einer darin geführten Kabine 15 angebunden ist. So dient der Teleskopantrieb 2 in geeigneter Weise dem Aufnehmen bzw. Absetzen eines Lagerguts 4.

Dargestellt ferner ist, wie an einer Stirnseite 313 des Hochregallagers 3 an wenigstens einem Regalbediengerät 1 ein Ladefach 14 angeordnet sein kann, welches ein Zuführen bzw. Abführen von Lagergut 4 in das bzw. aus dem Regalbediengerät 1 ermöglicht. Dazu umfasst das Hochregallager 3 beispielsweise Förderbänder 34, die in zweiter Horizontalrichtung X verlaufen können, und die jeweils einem der Ladefächer 14 zugeordnet sind. Hierbei ist jedes der Förderbänder 34 in erster Horizontalrichtung X direkt benachbart neben jeweils einem der Ladefächer 14 angeordnet. Jedes der Ladefächer 14 dient dem Be- und Entladen einer Kabine 15 des jeweiligen Regalbediengeräts 1. Hierbei wird, sofern sich die Kabine 15 innerhalb des Ladefachs 14 befindet, das Lagergut 4 von dem Förderband 34 in die Kabine 15 oder von dieser auf das jeweilige Förderband 34 befördert. Das Be- und Entladen des Förderbands 34 erfolgt vorzugsweise automatisiert, beispielsweise mittels eines Roboters 35, welcher insbesondere ein Sechs-Achs-Gelenkarm-Roboter mit Greifhand sein kann, wie hier dargestellt.

**Fig. 4** zeigt beispielhaft in einer Frontansicht ein typisches Lagergut 4 zur Lagerung in einem Hochregallager 3, insbesondere einen Container 41, welcher einen Containerkörper 411, sowie Containerkufen 412 umfasst, die durch wenigstens eine Aussparung 413 voneinander getrennt zueinander angeordnet sind. Fig. 4 zeigt beispielhaft in einer Vorderansicht ein typisches Lagergut 4, welches innerhalb eines Lagerfaches 32 eines Hochregallagers 3 angeordnet werden kann. Das Lagergut 4 kann insbesondere ein Container 41 mit einem Containerkörper 411 sein, an dessen Unterseite zwei in der ersten Horizontalrichtung Z verlaufende Kufen 412 angebracht sind, die im Hochregallager 3 auf einem Lagerfachboden 321 eines der Lagerfächer 32 ruhen. Zwischen den beiden Containerkufen 412, dem Containerkörper 411 und dem Lagerfachboden 321 bleibt somit eine Aussparung 413 für einen Eingriff des Teleskopantriebs 2 ausgebildet.

Alternativ oder kumulativ kann das Lagergut 4 auch in Form von beladenen Paletten, insbesondere Europaletten (nicht dargestellt), vorliegen, welche bekanntlich ebenfalls geeignete Aussparungen für einen Eingriff insbesondere eines sog. Tandem-Teleskopantriebes (nicht dargestellt) aufweisen.

Ein solcher Tandem-Teleskopantrieb ist vorzugsweise aus zwei zueinander parallel zu einem Tandem angeordneten Teleskopantrieben 2 gebildet. Dabei kann zumindest der Zahnriemenantrieb 23 eines, vorzugsweise beider, Teleskopantriebe 2 an einer, vorzugsweise gemeinsamen, Welle 235 eines Elektromotors 234, insbesondere über eines der Zahnriemenräder 232, unmittelbar oder mittelbar angebunden sein.

Darüber hinaus kann das Hochregallager 3 nebst Regalbediengerät 1 freilich an alle denkbaren handelsüblichen oder speziell angefertigten Anforderungen angepasst sein.

**Fig. 5** zeigt in einer Seitenansicht ein erstes Ausführungsbeispiel eines Teleskopantriebs 2 einer der Kabinen 15.

Der dargestellte Teleskopantrieb 2 weist eine Basis 21 auf, welche auf einem Kabinenboden 151 einer Kabine 15 angeordnet sein kann, und welche eine fest angebundene und in der ersten Horizontalrichtung Z verlaufende Zahnstange 211 der Basis 21 umfasst.

Der Teleskopantrieb 2 weist also eine Basis 21 auf, die vorzugsweise geeignet, insbesondere vorgesehen und eingerichtet ist, fest montiert zu werden. Mit anderen Worten umfasst die Basis 21 Montagemittel oder ist dafür vorgesehen, Montagemittel aufzunehmen, mittels derer der Teleskopantrieb 2 an weiteren Bauteilen, insbesondere eines Regalbediengeräts 1, befestigt werden kann. Beispielsweise ist die Basis an einem Vertikalträger handelsüblicher oder einer Kabine 15 eines erfindungsgemäßen Regalbediengeräts 1 angebunden, sofern der Teleskopantrieb 2 ein Bestandteil eines Regalbediengeräts 1 ist. Der Teleskopantrieb 2 ist vorzugsweise vorgesehen und eingerichtet, ein Bauteil bezüglich der Basis 21 in eine erste Horizontalrichtung Z zu versetzen. An der Basis 21 ist eine erste Zahnstange 211 fest angebunden, die in erster Horizontalrichtung Z verläuft. Somit ist die erste Zahnstange 211 bezüglich der Basis 21 stets zueinander ortsfest gehalten und bezüglich dieser nicht verbringbar. Beispielsweise kann die erste Zahnstange 211 an der Basis 21 mittels Schrauben befestigt sein.

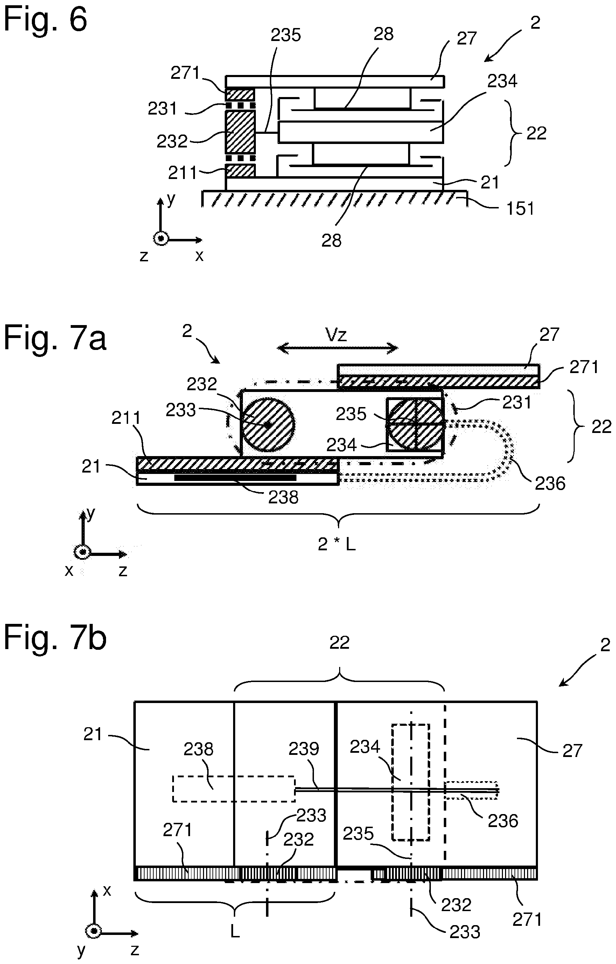

Auf der Basis 21 ist ein erster Schlitten 22 angeordnet, der mittels einer Linearführung 28 (im Detail in Fig. 6 dargestellt) in der ersten Horizontalrichtung Z, beweglich bezüglich einer Verfahrrichtung Vz, an der Basis 21 abgestützt ist.

Mit anderen Worten befindet sich die Basis 21 in Vertikalrichtung Y unterhalb des ersten Schlittens 22. Der erste Schlitten 22 selbst ist bezüglich der Basis 21 in erster Horizontalrichtung Z beweglich. Somit ist es möglich, den ersten Schlitten 22 in erster Horizontalrichtung Z bezüglich der Basis 21 zu bewegen. Zur Ermöglichung dieser Bewegung weist der Teleskopantrieb 2 eine Linearführung 28 auf, mittels derer der erste Schlitten 22 bezüglich der Basis 21 geführt und folglich an dieser abgestützt ist.

Die Linearführung 28 weist beispielsweise Rollen auf, die entlang einer Schiene geführt sind. Hierbei ist beispielsweise die Schiene ein Bestandteil der Basis 21 und die Rollen sind Bestandteil des ersten Schlittens 22. Alternativ kann die Basis 21 die Rollen und der Schlitten 22 die Schienen aufweisen.

Vorzugsweise umfasst die Linearführung 28 eine in erster Horizontalrichtung Z verlaufende Nut, innerhalb derer ein ebenfalls in erster Horizontalrichtung Z verlaufender Gleitschuh zumindest teilweise angeordnet ist. Zwischen dem Gleitschuh und der Nut ist vorzugsweise eine Spielpassung erstellt. Hierbei weist entweder die Basis 21 oder der Schlitten 22 die Nut bzw. den Gleitschuh auf. Somit wird in dieser Ausgestaltung der erste Schlitten 21 in erster Horizontalrichtung Z mittels Gleiten des Gleitschuhs innerhalb der Nut der Linearführung 28 geführt. In einer weiteren Alternative kann die Linearführung 28 als ein separates Bauteil ausgestaltet und weder Bestandteil des ersten Schlittens 22 noch der Basis 21 sein.

Erfindungsgemäß umfasst der erste Schlitten 22 einen Zahnriemenantrieb 23 aus zumindest einem Elektromotor 234 und einem mittels des Elektromotors 234 angetriebenen, umlaufenden und zumindest außenverzahnten oder bevorzugt doppelverzahnt ausgebildeten Zahnriemen 231, der in der ersten Horizontalrichtung Z gespannt und auf der ersten Zahnstange 211 des Basis 21 aufgesetzt ist.

Mit anderen Worten ist mittels des Zahnriemens 231 eine geschlossene Kurve erstellt. Der Zahnriemen 231 ist in erster Horizontalrichtung Z aufgespannt, wofür vorzugsweise zwei Flanken, die insbesondere jeweils vorzugsweise über ein Drittel der Länge des Zahnriemens 231 aufweisen, in erster Horizontalrichtung Z verlaufen. Der Zahnriemen 231 sitzt auf die Zahnstange 211 der Basis 21 auf und ist folglich mit dieser verzahnt. Geeigneter Weise ist eine der in erster Horizontalrichtung Z verlaufenden Flanken des Zahnriemens 231 zumindest abschnittsweise entlang der ersten Horizontalrichtung Z mit der Zahnstange 211 der Basis 21 in Eingriff. Der Zahnriemen 231 selbst ist an dieser Zahnstange 211 geeigneter Weise nicht angebunden, also nicht an dieser befestigt. Vielmehr erfolgt lediglich ein Formschluss aufgrund der Verzahnung. Weitere Befestigungsmittel sind vorzugsweise nicht vorhanden. Indem der Zahnriemen lediglich auf der Zahnstange 211 der Basis 21 aufgesetzt ist, ist vorteilhaft sowohl eine vergleichsweise leichte Montage als auch Demontage des Teleskopantriebs 1 ermöglicht. Vorzugsweise weisen die Zähne der Zahnstange 211 der Basis 21 in Vertikalrichtung Y nach oben und folglich auf den Zahnriemen 231 zu. Geeigneter Weise sind die Zahnteilungen des Zahnriemens 231 auf die Zahnteilungen der an der Basis 21 angebundenen Zahnstange 211 angepasst.

Besonders bevorzugt ist der Zahnriemen 231 doppeltverzahnt, d.h. innen- und außenverzahnt, ausgebildet, wobei die Zahnteilungen der Innen- und Außenzähne beispielsweise auch unterschiedlich sein können. Auf diese Weise ist ein Antrieb des Zahnriemens 231 vereinfacht, der beispielsweise mittels eines Zahnriemenrads (Zahnrad) 252 erfolgt, um den der Zahnriemen 231 zumindest teilweise geschlungen ist, und auf den der Zahnriemen 231 folglich aufgesetzt ist. Auf diese Weise ist ein Eingriff zwischen dem Zahnriemen 231 und der jeweiligen Zahnstange 211 bzw. 271 aufgrund der für den Antrieb des Zahnriemens 231 benötigten Bauteile nicht behindert. Vorzugsweise ist der Zahnriemen 231 mittels zweier drehbar gelagerter Zahnriemenräder 232 gespannt, die vorzugsweise zueinander lediglich in erster Horizontalrichtung Z versetzt sind. Hierbei ist der Abstand der beiden Zahnriemenräder 232 zueinander vorzugsweise größer oder zumindest gleich 50%, 60%, 70%, 80% oder 90% der Länge L des ersten Schlittens 22 in erster Horizontalrichtung Z. Auf diese Weise ist auch bei einer vergleichsweise großen Verbringung des ersten Schlittens 22 in erster Horizontalrichtung Z ein Eingriff des Zahnriemens 251 mit der jeweiligen Zahnstange 211 bzw. 271 gegeben.

Durch den erfindungsgemäßen Teleskopantrieb 2, bei dem ein erster Schlitten 22 einen Zahnriemenantrieb 23 umfasst, kann die Bauhöhe eines Teleskopantriebs 2 vorteilhaft derart minimiert ausgeführt werden, dass der Teleskopantrieb 2 in ein erfindungsgemäßes Regalbediengerät 1 integriert werden kann. Dabei kann auf dem ersten Schlitten 22 wenigstens ein Tisch 27 angeordnet sein, der mittels einer Linearführung 28 (im Detail in Fig. 6 dargestellt) in der ersten Horizontalrichtung Z beweglich an dem ersten Schlitten 22 abgestützt ist, und an dem eine in der ersten Horizontalrichtung Z verlaufende Zahnstange 271 des Tisches 27 fest angebunden ist, die auf dem Zahnriemen 231 des Zahnriemenantriebs 23 aufsetzt.

Mit anderen Worten ist der erste Schlitten 22 zwischen dem Tisch 27 und der Basis 21 positioniert. Indem der Tisch 27 selbst mittels einer Linearführung 28 an dem ersten Schlitten 22 abgestützt ist, ist dieser in erster Horizontalrichtung Z geführt. Folglich ist auch der Tisch 27 bezüglich des ersten Schlittens 22 in erster Horizontalrichtung Z beweglich. Besonders bevorzugt ist die Linearführung 28 zwischen Tisch 27 und erstem Schlitten 22 im Wesentlichen baugleich zu der Linearführung 28 zwischen erstem Schlitten 22 und Basis 21 ausgestaltet, was vorteilhaft die Verwendung von Gleichteilen ermöglicht. Ferner ist an dem Tisch 27 eine Zahnstange 271 fest angebunden, die in erster Horizontalrichtung Z verläuft, und bezüglich des Tisches 27 nicht verbringbar, sondern an diesem in geeigneter Weise, insbesondere mittels Schrauben, befestigt ist.

Die Zahnstange 271 des Tisches 27 ist wiederum ihrerseits auf den außenverzahnten Zahnriemen 231 aufgesetzt und folglich mit diesem in Eingriff. Somit ist der Zahnriemen 231 mit den Zahnstangen 211 und 271 von Basis 21 und Tisch 27 verzahnt, wobei der Zahnriemen 231 vorzugsweise weder an der einen 211 noch an der anderen Zahnstange 271 befestigt ist. Vielmehr wird der Eingriff zwischen Zahnriemen 231 und Zahnstangen 211 und 271 jeweils mittels Aufsetzen erstellt, was eine vergleichsweise leichte Montage und Demontage ermöglicht. Geeigneter Weise sind auch die Zahnteilungen der am Tisch 27 angeordneten Zahnstange 271 auf die Zahnteilungen des Zahnriemens 231 angepasst.

Zweckmäßiger Weise ist auch der Zahnriemen 231 zwischen den Zahnstangen 211 und 271 von Basis 21 und Tisch 27 angeordnet. Dabei sind vorzugsweise zwei unterschiedliche, in erster Horizontalrichtung Z verlaufende Flanken des Zahnriemens 231 mit den beiden Zahnstangen 211 und 271 in Eingriff. Hierbei ist die am Tisch 27 angeordnete Zahnstange 271 vorzugsweise mit der Flanke des in erster Horizontalrichtung Z gespannten Zahnriemens 231 in Eingriff, die parallel zu derjenigen Flanke des Zahnriemens 231 ist, die in Eingriff mit der an der Basis 21 angeordneten Zahnstange 211 ist. Vorzugsweise weisen die Zähne der Zahnstange 211 der Basis 21 in Vertikalrichtung Y nach oben und die Zähne der Zahnstange 271 des Tisches 27 in Vertikalrichtung Y nach unten, und folglich jeweils auf den Zahnriemen 231 zu. Bei einem Antrieb des Zahnriemens 231 werden dann die beiden Flanken entgegengesetzt zueinander in erster Horizontalrichtung Z verbracht. Auf diese Weise ist ein vergleichsweise kostengünstiger und robuster Teleskopantrieb 2 bereitgestellt, bei dem der Zahnriemen 231 an den Zahnstange 211 und 271 von Basis 21 und Tisch 27 abrollt, wobei der erste Schlitten 22 bezüglich der Basis 21 in die gleiche Richtung verbracht wird wie der Tisch 27 bezüglich des ersten Schlittens 21. Somit die Ausdehnung des Teleskopantriebs 2 in erster Horizontalrichtung Z aufgrund des Tisches 27 vergrößert, womit die Ausdehnungs- bzw. Verfahrgeschwindigkeit vorteilhaft im Wesentlichen verdoppelt ist.

Vorzugsweise erstreckt sich auch die am Tisch 27 angeordnete Zahnstange 271 entlang der vollständigen Länge des Tisches 27 in erster Horizontalrichtung Z. Insbesondere ist die Zahnstange 271 freiendseitig bündig mit dem Tisch 27 gelängt, was eine Beschädigung dieser Zahnstange 271 vermeidet. Auch ist auf diese Weise ein vergleichsweise kompakter Teleskopantrieb 2 bereitgestellt. Aufgrund der vergleichsweise großen Ausdehnung der am Tisch 27 angeordneten Zahnstange 271 ist ein vergleichsweise weites Verbringen des Tisches 27 bezüglich des ersten Schlittens 22 ermöglicht, wobei stets eine vergleichsweise große Anzahl von Zähnen des Zahnriemens 231 sowie der am Tisch 27 angeordneten Zahnstange 271 in Eingriff verbleiben.

Vorzugsweise ist der auf dem ersten Schlitten 21 angeordnete Tisch 27 zur Aufnahme von Gegenständen, beispielsweise Lagergut 4, angepasst ausgebildet. Folglich kann mittels des Tisches 27 ein Aufnehmen bzw. Absetzen auch von spezifischem Lagergut 4 wie speziell angefertigte Container 41 erfolgen. Hierbei ist der Tisch 27 vorzugsweise aus einem resistenten Material erstellt, wie Stahl, was eine Beschädigung des Teleskopantriebs 2 vermeidet.

**Fig. 6** zeigt den Teleskopantrieb 2 aus Fig. 5 in einer um 90° gedrehten Schnittdarstellung. Dargestellt ist, wie die Linearführungen 28 vorteilhaft den ersten Schlitten 22 bzw. den Tisch 27 in der ersten Horizontalrichtung Z, beweglich bezüglich der Verfahrbewegung Vz, unmittelbar oder mittelbar an der Basis 21 abstützen.

Mit anderen Worten ist der erste Schlitten 22 bezüglich der Basis 21 in erster Horizontalrichtung Z und der Tisch 27 bezüglich des ersten Schlittens 22 und somit bezüglich der Basis 21 ebenfalls in erster Horizontalrichtung Z beweglich. Die Linearführungen 28 sind möglichst baugleich und beispielsweise mittels eines Gleitschuhs gebildet, der innerhalb einer C-förmigen Nut eingelegt ist. Infolgedessen kann eine Verfahrbewegung Vz in erster Horizontalrichtung Z durchgeführt werden. An der Oberseite des erstens Schlittens 22 ist bevorzugt ein Tisch 27 befestigt, der eine vergleichsweise stabile Oberfläche mit einem vergleichsweise großen Reibkoeffizienten aufweist. Alternativ oder in Kombination hierzu können zur Transportsicherung des Lagerguts 4 an dem Tisch 27 lösbare Befestigungsmittel, wie beispielsweise Sauger oder dergleichen, angebunden sein.

In den Fig. 5 und 6 erkennbar ist, wie an der Basis 21 eine Zahnstange 211 ortsfest angebunden ist. Mit anderen Worten ist die Zahnstange 211 nicht bezüglich der Basis 21 beweglich. An den Tisch 27 ist ebenfalls eine Zahnstange 271 angebunden, die vorzugsweise baugleich zur Zahnstange 211der Basis 21 ist. Die beiden Zahnstangen 211 und 271 sind aufeinander zu ausgerichtet. Mit anderen Worten weist die Verzahnung der beiden Zahnstangen aufeinander zu. Die Zahnstange 211 der Basis 21 erstreckt sich in der ersten Horizontalrichtung Z vorzugsweise entlang der vollständigen Länge L der Basis 21, und ist bündig zu dieser angeordnet. Hierbei ist die Länge L der Basis 21 in erster Horizontalrichtung Z gleich der Länge L des ersten Schlittens 22 in erster Horizontalrichtung Z, die gleich der Länge L des Tisches 27 in erster Horizontalrichtung Z ist. Folglich ist die Zahnstange 211 der Basis und die baugleiche Zahnstange 271 des Tisches 27 gleich der Länge L der Basis 21, wobei auch die Zahnstange 271 des Tisches 27 in erster Horizontalrichtung Z bündig mit dem Tisch 27 endet.

Mit anderen Worten ist die Ausdehnung der Zahnstange 211 der Basis 21 in erster Horizontalrichtung Z gleich der Ausdehnung der Basis 21 in dieser Horizontalrichtung Z. Indem die an der Basis 21 angebundene Zahnstange 211 an deren Freienden in erster Horizontalrichtung Z im Wesentlichen bündig mit der Basis 21 ist, kann auf diese Weise eine Beschädigung dieser Zahnstange 211 aufgrund eines etwaigen Überstands ausgeschlossen werden. Aufgrund der vergleichsweise großen Länge L der an der Basis 21 angebundenen Zahnstange 211 kann der erste Schlitten 21 über eine vergleichsweise große Strecke mittels des Zahnriemens 232 angetrieben verfahren werden, wobei stets eine vergleichsweise große Anzahl von Zähnen des Zahnriemens 232 mit Zähnen der an der Basis 21 angebundenen Zahnstange 211 in Eingriff ist. Daher ist ein vergleichsweise großer Kraftübertrag ermöglicht, ohne dass eine Beschädigung des Zahnriemens 232 bzw. der Zahnstange 211 erfolgt. Somit können mittels des Teleskopantriebs 2 auch vergleichsweise schwere Lagergüter 4 wie Bauteile verbracht werden.

Zweckmäßigerweise ist die Länge L der Basis 21 in erster Horizontalrichtung Z gleich der Länge L des ersten Schlittens 22 in dieser Horizontalrichtung Z. Folglich ist im eingefahrenen Zustand des Teleskopantriebs 2 der erste Schlitten 22 im Wesentlichen bündig in erster Horizontalrichtung Z mit der Basis 21, was ein Verbringen des Teleskopantriebs 2 vereinfacht. Auch ist es ermöglicht, den Zahnriemen 231 des Zahnriemenantriebs 23 über eine vergleichsweise große Strecke in erster Horizontalrichtung Z zu spannen, was vorteilhaft einen Kraftübertrag zwischen dem ersten Schlitten 22 und der Basis 21 vergrößert. Ferner ist auf diese Weise ein vergleichsweise kompakter Teleskopantrieb bereitgestellt.

Im eingefahrenen Zustand des Teleskopantriebs 2 sind somit in erster Horizontalrichtung Z betrachtet die Basis 21 sowie der erste Schlitten 22 als auch der Tisch 27 miteinander bündig, wie in Fig. 5 gezeigt.

Über ein Zahnriemenrad 232, das über eine Welle 235 mit einem Elektromotor 234 wirkverbunden ist, kann der zumindest außenverzahnte oder bevorzugt doppelverzahnt ausgebildete Zahnriemen 231 (hier nicht abgebildet) angetrieben werden.

Mit anderen Worten wird bei einem Antrieb des Zahnriemens 231 dieser bewegt, wobei aufgrund des Eingriffs mit der Zahnstange 211 der Basis 21 der Zahnriemen 231 und folglich auch der erste Schlitten 22 in erster Horizontalrichtung Z bewegt werden. Hierbei wird der Zahnriemen 231 an der Zahnstange 211 der Basis 21 abrollt. Geeigneter Weise ist der Zahnriemen 231 elektromotorisch angetrieben und Teil eines Zahnriemenantriebs 23, wofür beispielsweise ein Servo-Elektromotor verwendet wird, was eine vergleichsweise genaue Positionierung des Zahnriemens 231 bezüglich der an der Basis 21 angebundenen Zahnstange 211 und folglich des ersten Schlittens 22 bezüglich der Basis 21 ermöglicht. Somit ist vorteilhaft ein vergleichsweise robuster und wartungsarmer Teleskopantrieb 1 bereitgestellt, da aufgrund der Trennung der Linearführung 28 von dem Zahnriemenantrieb 23, der den Zahnriemen 231 und die Zahnstange 211 umfasst, auch vergleichsweise große Lasten bzw. Lagergüter 4 bewegt werden können. Auch bauen Zahnriemen 231 und Zahnstange 211 niedrig, womit auch Herstellungskosten verringert sind.

Der umlaufend ausgebildete Zahnriemen 231 steht in Vertikalrichtung Y nicht nur mit der Zahnstange 211 der Basis sondern auch mit einer Zahnstange 271 des Tisches 27 mit seiner Außenverzahnung in Eingriff. Somit ist mittels des Zahnriemens 231 eine umlaufende Kurve erstellt, die im Wesentlichen O-förmig ist, und der in Fig. 5 strichpunktiert dargestellt ist. Wie dargestellt ist der Zahnriemen 231, vorzugsweise über seine Innenverzahnung, mittels wenigstens zweier Zahnriemenräder 232 in erster Horizontalrichtung Z gespannt, die zueinander in erster Horizontalrichtung Z beabstandet sind, wobei der Abstand im Wesentlichen beispielsweise 3/4 der Länge L der Basis 21 entsprechen kann.

Vorzugsweise ist die Drehachse 233 der Zahnriemenräder 232 senkrecht zur Bewegungsrichtung des Zahnriemens 231, d.h. parallel zur zweiten Horizontalrichtung X verlaufend ausgerichtet. Mit anderen Worten verläuft die Drehachse 233 in einer zweiten Horizontalrichtung X, die senkrecht zur Vertikalrichtung Y und zur ersten Horizontalrichtung Z ist, in der der Zahnriemen 231 gespannt ist, so dass eines der Zahnriemenräder 232 an einer bevorzugt ebenfalls in zweiter Horizontalrichtung X verlaufenden Welle 235 eines Elektromotors 234 angebunden werden kann, welcher erfindungsgemäß ein Bestandteil des ersten Schlittens 22 ist. Auf diese Weise ist die Mechanik des Teleskopantriebs 2 vereinfacht und folglich eine Störanfälligkeit reduziert.

Der Elektromotor 234 kann insbesondere ein Servo-Motor mit einer Drehzahl- und einer Lageregelung sein. Die Bestromung des Elektromotors 234 sowie die Steuerung erfolgt beispielsweise über Leitungen, die zwischen dem ersten Schlitten 22 und der Basis 21 in einer Energieführungskette 236 angeordnet sind.

Indem der so angetriebene Zahnriemen 231 auf der Zahnstange 211 der Basis 21 aufsitzt, steht die in Vertikalrichtung Y unten liegende und in erster Horizontalrichtung Z verlaufende Flanke des O-förmig gespannten Zahnriemens 231 in Eingriff mit den Zähnen der Zahnstange 211 der Basis 21. Zugleich steht die hierzu parallele und in Vertikalrichtung Y oberhalb dieser Flanke verlaufende weitere in erster Horizontalrichtung Z verlaufende Flanke des Zahnriemens 231 in Eingriff mit der Zahnstange 271 des Tisches 71, der folglich ebenfalls mit dem Zahnriemen 231 verzahnt ist. Die Zähne des Zahnriemens 231 und der beiden Zahnstangen 211 und 271 verlaufen hierbei senkrecht zur ersten Horizontalrichtung Z in Richtung zweiter Horizontalrichtung X.

Wie in den Fig. 5 und 6 schließlich auch gut ersichtlich beträgt die Bauhöhe des Teleskopantriebs 2 in dieser Ausgestaltung vorteilhaft lediglich die Höhe der Basis 21 und der daran angeordneten Zahnstange 211 plus die Höhe eines, einen Zahnriemenantrieb 23 umfassenden, ersten 22 Schlittens, sowie die Höhe eines darüber angeordneten Tisches 27 inklusive am Tisch 27 angeordneter Zahnstange 271 (vgl. auch Fig. 7 sogleich).

Fig. 7a in einer Seitenansicht und Fig. 7b in einer Draufsicht zeigen vergrößert den Teleskopantrieb 2 aus Fig. 5 in einem mittels seines Zahnriemenantriebs 23 ausgefahrenen Zustand. Erkennbar ist, wie vorteilhaft eine Verfahrbewegung Vz in erster Horizontalrichtung Z wenigstens über die Hälfte der Längen der jeweiligen Zahnstangen 21 und 271 von Basis 21 und Tisch 27 ermöglicht ist, so dass sich ein Gesamthub von zumindest 2 ^{∗} L ergibt.

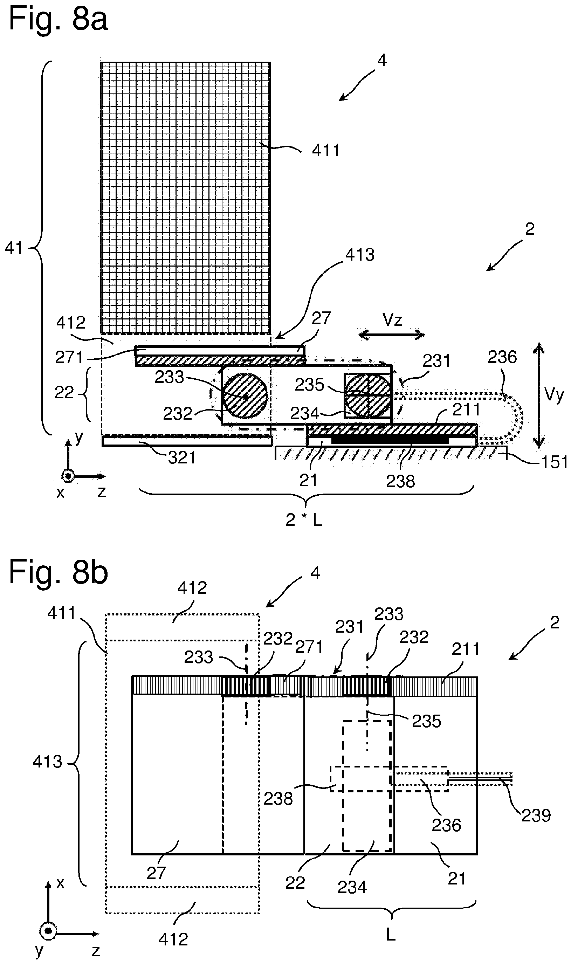

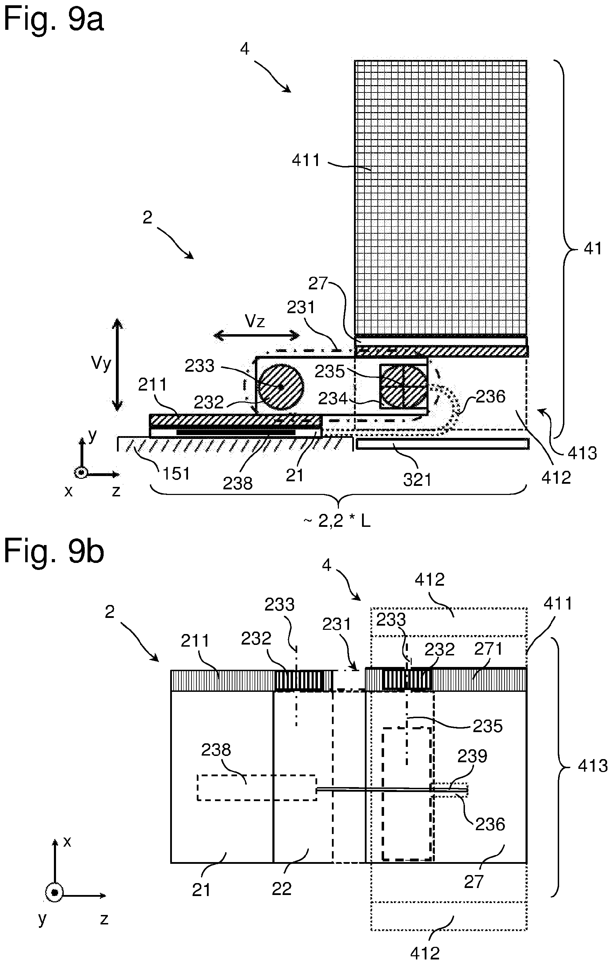

Sobald nämlich der Elektromotor 234 betrieben wird, und folglich die Welle 235 ein Zahnriemenrad 232 um dessen Drehachse 233 rotiert, wird der Zahnriemen 231 bewegt und folglich entlang der Zahnstange 211 der Basis 21 abgewälzt. Infolgedessen wird der erste Schlitten 22 zur Ausführung einer Verfahrbewegung Vz in erster Horizontalrichtung Z bewegt. Da die Zahnstange 271 des Tisches 71 ebenfalls mit der verbleibenden, in erster Horizontalrichtung Z verlaufenden Flanke des Zahnriemens 231 in Eingriff ist, wird diese in die gleiche Richtung bewegt. Hierbei ist es vorzugsweise möglich, den Zahnriemen 231 in beide Richtungen also sowohl in einer positiver (+Z) als auch in einer negativer (-Z) ersten Horizontalrichtung, zu bewegen, so dass der erste Schlitten 21 in erster Horizontalrichtung Z beidseitig der Basis 21 und der darauf angeordnete Tisch 27 beidseitig des ersten Schlittens 21 verfahrbar ist, wie nachfolgend in den Fig. 8 und 9 gezeigt.

Hierfür ist der Zahnriemen 231, und insbesondere die an der Basis 21 angebundene Zahnstange 211 geeignet ausgestaltet. Insbesondere ist der Zahnriemen 231 besonders bevorzugt nicht an der Zahnstange 211 der Basis befestigt, sondern lediglich mit dieser in Eingriff, weswegen dieser bei einem Antrieb raupenartig entlang der Zahnstange 211 der Basis 21 abrollt. Vorzugsweise ist der Zahnriemen 231 in beide Richtungen, also sowohl in einer positiven (+Z) als auch in einer negativen (-Z) ersten Horizontalrichtung Z, antreibbar.

Geeigneter Weise weist der Teleskopantrieb 2 einen Anschlag (nicht dargestellt) auf, mittels dessen die Bewegung des ersten Schlittens 22 bezüglich der Basis 21 begrenzt ist. Vorzugsweise weist die Linearführung 28 den Anschlag auf, mittels dessen eine Verfahrbewegung V des ersten Schlittens 22 bezüglich der Basis 21 begrenzt wird. Beispielsweise wird mittels des Anschlags verhindert, dass der erste Schlitten 22 bezüglich der Basis 21 in erster Horizontalrichtung Z um mehr als 80%, 75%, 70%, 60%, 55%, 50%, 45% oder 40% der Länge L des ersten Schlittens 22 übersteht. Insbesondere weist der Teleskopantrieb 2 zwei derartige Anschläge auf, wobei beispielsweise der maximal mögliche Überstand des ersten Schlittens 22 in erster Horizontalrichtung Z bezüglich der Basis 21 auf beiden Seiten gleich ist. Auf diese Weise ist ein Ablösen des ersten Schlittens 22 von der Basis 21 aufgrund einer übermäßigen Bewegung V verhindert. Auch kann so ein Kippen oder eine vergleichsweise starke Belastung der Linearführung 28 vermieden werden.

Besonders bevorzugt ist auch der Tisch 27 in erster Horizontalrichtung Z mittels des Zahnriemens 231, und insbesondere mittels der am Tisch 27 angeordneten Zahnstange 271, beidseitig des ersten Schlittens 22 verfahrbar. Mit anderen Worten ist der Tisch 27 geeignet, insbesondere vorgesehen und eingerichtet, mittels des Zahnriemens 271 beidseitig des ersten Schlittens 22 verfahren zu werden. Bei Betrieb des Teleskopantriebs 2 wird, sofern der erste Schlitten 22 beidseitig der Basis 21 verfahrbar ist, insbesondere der erste Schlitten 22 bezüglich der Basis 21 und der Tisch 27 bezüglich des ersten Schlittens 22 auf in erster Horizontalrichtung Z gesehen jeweils gleiche Seite verbracht, was folglich die Ausdehnung bzw. den Hub des Teleskopantriebs 2 in erster Horizontalrichtung Z vorteilhaft vergrößert. Aufgrund der beidseitigen Verfahrbarkeit von erstem Schlitten 22 und Tisch 27 ist ein Verbringen von Bauteilen, insbesondere ein Aufnehmen bzw. Absetzen von Lagergut 4, beidseitig der Basis 21 ermöglicht, wobei eine maximale Verbringungslänge vergrößert ist.

Besonders bevorzugt kann ein Anschlag vorgesehen sein, mittels dessen eine Bewegung auch des Tisches 27 bezüglich des ersten Schlittens 22 begrenzt wird. Hierbei ist insbesondere der Anschlag derart eingestellt, dass der Tisch 27 bezüglich des ersten Schlittens 22 vorzugsweise um den gleichen Betrag verbracht werden kann, wie der erste Schlitten 22 bezüglich der Basis 21. Zweckmäßiger Weise weist wenigstens eine der zwischen Tisch 27 und erstem Schlitten 22 angeordneten Linearführungen 28 einen Anschlag auf, mittels dessen eine Bewegung des Tisches 27 bezüglich des ersten Schlittens 22 begrenzt ist, sodass ein Ablösen des Tisches 27 von dem ersten Schlitten 22 aufgrund eines übermäßigen Antriebs des Zahnriemens 231 des Zahnriemenantriebs 23 unterbunden ist.

**Fig. 8a** in einer Seitenansicht und **Fig. 8b** in einer Draufsicht zeigen den ausgefahrenen Teleskopantrieb 2 aus Fig. 5 im Moment eines soeben erfolgten Absetzens eines typischen Lagerguts 4; und **Fig. 9a** und **Fig. 9b** im Moment des Anhebens eines typischen Lagerguts 4. Erkennbar ist, wie der jeweilige Gesamthub des Teleskopantriebs 2 mehr als 2 ^{∗} L betragen muss, wenn das Lagergut 4 in seiner gesamten Breite unterfasst werden soll. Dabei zeigen Fig. 8a und 8b beispielhaft eine schon auf 2 ^{∗} L rückgeführte Verfahrbewegung Vz und Fig. 9a und 9b die noch 2,2 ^{∗} L betragende Verfahrbewegung Vz in erster Horizontalrichtung Z.

Infolgedessen ist es ermöglicht, zwei zueinander benachbarte und an dieselbe Lagergasse 33 angrenzende Lagergerüste 31 mittels des gleichen Regalbediengeräts 1 zu bestücken, wobei der das Lagergut 4 tragende Tisch 27 in die Aussparung 413 zwischen den Kufen 412 oder einen vergleichbaren Freiraum unter dem Lagergut 4 ausgefahren werden kann. Aufgrund des ersten Schlittens 21 und des darauf angeordneten Tisches 27 ist die maximale Verbringungslänge in erster Horizontalrichtung Z vergrößert. Wegen der Positionierung des Zahnriemens 231 zwischen den beiden Zahnstangen 211 und 271 wird der erste Schlitten 22 bezüglich der Basis 21 auf die gleiche Seite in erster Horizontalrichtung Z verfahren wie der Tisch 27 bezüglich des ersten Schlittens 22, wobei beide Verfahrbewegungen Vz im Wesentlichen gleichzeitig erfolgen.

Das Absetzen bzw. Anheben eines typischen Lagerguts 4 kann vorteilhaft durch eine Verfahrbewegung Vy der Kabine 15 (in den Fig. 8 und 9 nur durch den Kabinenboden 151 repräsentiert) in Vertikalrichtung Y erfolgen.

Ein Regalbediengerät 1 mit mindestens einer zumindest in einer zweiten Horizontalrichtung X und einer Vertikalrichtung Y elektromotorisch angetriebenen, in einer dreidimensionalen Fächermatrix 13 des Regalbediengerätes 1 geführten Kabine 15, die zur Aufnahme eines Lagerguts 4 einen Teleskopantrieb 2 wie zuvor beschrieben aufweist, ist beispielsweise gemäß einem nachfolgend beschriebenen Verfahren betrieben:
In einem ersten Arbeitsschritt wird eine Kabine 15 in einem zu einem Lagerfach 32 korrespondierenden Gerüstfach 11 positioniert.
In einem sich hieran anschließenden zweiten Arbeitsschritt wird der Elektromotor 234 eines Zahnriementriebs 23 derart angesteuert, dass der Zahnriemen 231 bewegt wird. Infolgedessen wird der erste Schlitten 22 und der Tisch 27 in das Lagerfach 32 beispielsweise zwischen die beiden Kufen 412 eines aufzunehmenden Containers 41 oder vergleichbaren Lagerguts 4 und somit in die durch die Containerkufen 412 belassene oder eine vergleichbare Aussparung 413 gefahren. Hierbei ist der Tisch 27 sowie der erste Schlitten 22 sowohl vom Lagerfachboden 321 als auch von dem Lagergut 4 beabstandet. Der resultierende Zustand ist in Fig. 8a in einer Seitenansicht, die parallel zur Vertikalrichtung Y und zur ersten Horizontalrichtung Z ist, sowie in Fig. 8b in einer Draufsicht dargestellt.
In einem sich hieran anschließenden dritten Arbeitsschritt wird die vollständige Kabine 15 in Vertikalrichtung Y bewegt, weswegen der Tisch 27 von unten gegen den Containerkörper 411 des Lagerguts 4 bewegt wird. Infolgedessen werden die Kufen 412 von dem Lagerfachboden 321 beabstandet, wie in Fig. 9a in einer Seitenansicht gezeigt. Folglich wird der Container 41 angehoben und sitzt auf dem Tisch 27 auf.
In einem sich hieran anschließenden vierten Arbeitsschritt wird der Teleskopantrieb 2 eingezogen, wofür der Elektromotor 234 geeignet bestromt wird. Folglich wird der in Fig. 5 dargestellte Zustand des Teleskopantriebs 2 erstellt, wobei das Lagergut 4 aus dem Lagerfach 32 in die Kabine 15 bewegt ist.
In einem sich hieran anschließenden fünften Arbeitsschritt wird die Kabine 15 in einem weiteren Gerüstfach 12 oder in ein Ladefach 14 positioniert.
In einem sich hieran anschließenden sechsten Arbeitsschritt wird der Teleskopantrieb 2 erneut betrieben und ausgefahren, also eine Verfahrbewegung Vz des ersten Schlittens 22 sowie des Tisches 27 in erster Horizontalrichtung Z durchgeführt. Somit wird das Lagergut 4 in einem weiteren der Lagerfächer 32 oder oberhalb eines der Förderbänder 34 positioniert, wobei die Kufen 412 des Lagerguts 4 zu dem jeweiligen Lagerfachboden 321 bzw. zu dem Förderband 34 beabstandet sind. Das Lagerfach 32 kann beispielsweise ein Bestandteil eines weiteren Lagergerüsts 31 sein, das an die gleiche Lagergasse 33 grenzt.

Zum Absetzen des Containers wird ein siebter Arbeitsschritt ausgeführt, bei dem die vollständige Kabine 15 in Vertikalrichtung Y bewegt wird, insbesondere nach unten. Infolgedessen wird das Ladegut 4 auf dessen Kufen 412 oder vergleichbar abgestützt abgestellt.

In dem sich anschließenden achten Arbeitsschritt wird der nun von dem Ladegut 4 freie Tisch 27 mittels geeigneter Bestromung des Elektromotors 234 erneut in eine Position in Vertikalrichtung Y oberhalb der Basis 21 verfahren und somit der in Fig. 5 dargestellte Zustand des Teleskopantriebs 2 erstellt.

Die Versorgung des Elektromotors 234 des Teleskopantriebs 2 mit Elektrizität kann über eine, vorzugsweise in einer Energieführungskette 236 (siehe insb. Fig. 5, 7a, 8a, 9a) geführten, Stromleitung 239 sichergestellt werden, welche den Elektromotor 234 mit wenigstens einem in der Kabine 15 angeordneten wieder-aufladbaren Stromspeicher 238 verbindet, und welcher in gesonderten Ladestationen (nicht dargestellt) und/oder bevorzugt bei Stillstand der Kabine 15 über wenigstens eine Steckverbindung aus der Stromversorgung des Regalbediengeräts 1, und/oder während der Verfahrbewegungen der Kabine 15 mittels wenigstens eines in Drehung versetzten Dynamos (nicht dargestellt), vorzugsweise mittels wenigstens eines in einer der Laufrollen der Kabine 15 angeordneten Nabendynamos (nicht dargestellt), aufgeladen wird.

Die bisherigen Ausführungen zusammenfassend ist mittels des Teleskopantriebs 2 ein Greifen eines Gegenstandes, insbesondere Lagerguts 4, möglich, der sich in erster Horizontalrichtung Z außerhalb der Basis 21 befindet. Hierbei ist es mittels des Teleskopantriebs 2 auch ermöglicht, einen auf einer Seite der Basis 21 befindenden Gegenstand, insbesondere Lagergut 4, auf die verbleibende Seite in erster Horizontalrichtung Z ohne Absetzen bzw. Umsetzen zu transportieren. Der erste Schlitten 22 und der Tisch 27 sind mittels einer Linearführung 28 verfahrbar, welche vorzugsweise die zulässige Verfahrbewegung Vz nur bis zu einer Grenze ausführt, bei der eine Führung und eine Abstützung noch gewährleistet ist. Bei Betrieb aufgrund des Antriebs des Elektromotors 234 des Zahnriemenantriebs 23 wird dessen Zahnriemen 231 und somit der erste Schlitten 22 gegenüber der Basis 21 verschoben. Gleichzeitig wird der Tisch 27 gegenüber dem ersten Schlitten 22 um das gleiche Maß verschoben. Folglich kann der Tisch 27 bezüglich der Basis 21 vorteilhaft um das doppelte Maß in erster Horizontalrichtung Z verschoben werden.

In einer weiteren nicht dargestellten Ausführungsform der Erfindung kann ein jedes der Lagerfächer 32 einen derartigen Teleskopantrieb 2 umfassen, der sich entweder an dem Boden, einer Seitenwand oder der Decke des jeweiligen Lagerfachs 32 befindet. Mittels des Teleskopantrieb 2 wird das sich in dem jeweiligen Lagerfach 22 befindende Lagergut 4 in das zugeordnete Gerüstfach 12 befördert oder von diesem in das jeweilige Lagerfach 32, sofern in dem Gerüstfach 12 eine der Kabinen 15 angeordnet ist.

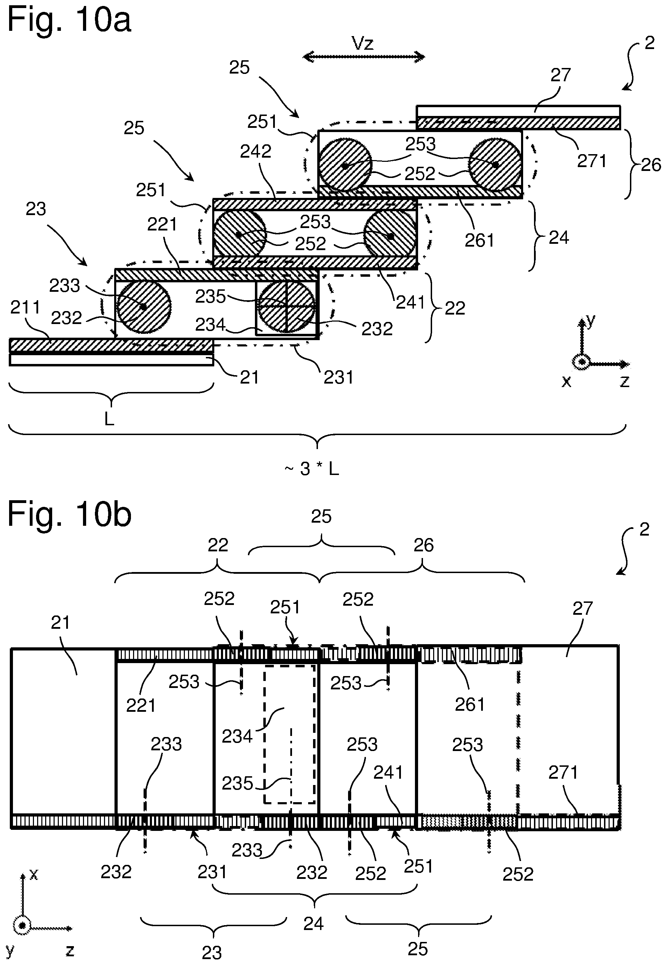

So zeigt **Fig. 10a** in einer Seitenansicht ein zweites Ausführungsbeispiel eines kaskadiert aufgebauten Teleskopantriebs 2 einer der Kabinen 15. Beispielhaft umfasst die dargestellte Ausgestaltung des kaskadiert aufgebauten Teleskopantriebs 2 drei Schlitten 22, 24 und 26 sowie einen auf den dritten Schlitten 26 angeordneten Tisch 27. Erkennbar kommt der kaskadiert aufgebaute Teleskopantrieb 2 mit lediglich einem, am ersten Schlitten angeordneten, Zahnriemenantrieb 23 aus, da sowohl der zweite 24 als auch der darüber angeordnete dritte Schlitten 26 über gesonderte Zahnriementriebe 25 bewegt werden können. Dazu weist der erste Schlitten 22 an seiner dem Zahnriemenantrieb 23 gegenüberliegenden Seite eine ortsfest angebundene und in der ersten Horizontalrichtung Z verlaufende Zahnstange 221 auf, wobei der zweite Schlitten 24 einen Zahnriementrieb 25 mit einem Zahnriemen 251 umfasst, der in der ersten Horizontalrichtung Z gespannt ist und auf der Zahnstange 221 des ersten Schlittens 22 aufsetzt. Des Weiteren umfasst der zweite Schlitten 24 an seiner dem Zahnriementrieb 25 gegenüberliegenden Seite eine ortsfest angebundene und in der ersten Horizontalrichtung Z verlaufende Zahnstange 242, wobei der dritte Schlitten 26 einen Zahnriementrieb 25 mit einem Zahnriemen 251 umfasst, der in der ersten Horizontalrichtung Z gespannt und auf der Zahnstange 242 des zweiten Schlittens 24 aufgesetzt ist, und wobei an dem dritten Schlitten 26 ortsfest eine in der ersten Horizontalrichtung Z verlaufende Zahnstange 261 angebunden ist, die auf dem Zahnriemen 251 des Zahnriementriebes 25 des zweiten Schlittens 24 aufsetzt. Soweit schließlich auf dem zweiten 24 oder - wie dargestellt - auf dem dritten 26 Schlitten ein Tisch 27 angeordnet ist, ist an diesem ortsfest eine in der ersten Horizontalrichtung Z verlaufende Zahnstange 271 angebunden, die auf dem Zahnriemen 251 des Zahnriementriebs 25 des zweiten 24 oder dritten 26 Schlittens aufsetzt ist.

Eine derartige Kaskadierung mit drei Schlitten 22, 24, 26 und Tisch 27 kann beispielsweise vorteilhaft ein Verfahren des Tisches 27 gegenüber der Basis 21 um bis zu 3 ^{∗} L ermöglichen und damit ein Versetzen des Lagerguts 4 in ein paralleles Lagergerüst 31, wie in Fig. 1b dargestellt.

Auf diese Weise ist eine Kaskadierung des Teleskopantriebs 2 vorteilhaft unter Beibehalt kleiner Bauhöhen ermöglicht, bei der für jede zusätzliche Kaskade der jeweilige Zahnriementrieb 25 eine Zahnstange 261, 271 des nächsten Schlittens 26 oder Tisches 27 bewegt und der Zahnriementrieb 25 des jeweiligen Schlittens 24, 26 von einer Zahnstange 221, 242 des vorhergehenden Schlittens 22, 24 bewegt wird. Vorteilhaft muss hierbei insgesamt nur ein Zahnriemenantrieb 23 vorgesehen werden.

Der oder die Zahnriemen 231 und 251 sind vorteilhaft jeweils mittels zweier drehbar gelagerter Zahnriemenräder 232 und 252 gespannt, wobei es sich bewährt hat, dass die Drehachsen 233 und 253 der Zahnriemenräder 232 und 252 in einer zweiten Horizontalrichtung X, insbesondere senkrecht zur ersten Horizontalrichtung Z, verlaufen.

Die Zahnstangen 211, 241; 221, 261; 242, 271 können sich bevorzugt entlang der vollständigen Länge L der Basis 21 in der ersten Horizontalrichtung Z erstrecken, deren Länge L zur Länge der Schlitten 22, 24, 26 und ggf. eines Tisches 27 in der ersten Horizontalrichtung Z korrespondiert. Dabei hat sich bewährt, dass die Länge L der Basis 21 gleich der Länge der Schlitten 22, 24, 26 und ggf. des Tisches 27 in der ersten Horizontalrichtung Z ausgebildet ist.

Die unmittelbare oder mittelbare Abstützung der einzelnen Schlitten 22, 24, 26 sowie ggf. eines Tisches 27 erfolgen vorzugsweise analog wie zu Fig. 6 beschrieben: Soweit dabei - wie dargestellt - zwischen dem ersten Schlitten 22 und einem Tisch 27 wenigstens ein zweiter Schlitten 24 angeordnet ist, ist dieser mittels einer Linearführung 28 in der ersten Horizontalrichtung Z beweglich an dem ersten Schlitten 22 abgestützt. Soweit - wie dargestellt - zwischen dem zweiten Schlitten 24 und dem Tisch 27 ein dritter Schlitten 26 angeordnet ist, ist dieser mittels einer Linearführung 28 in der ersten Horizontalrichtung Z beweglich an dem zweiten Schlitten 24 abgestützt. Soweit auf dem zweiten 24 oder - wie dargestellt - auf dem dritten 26 Schlitten ein Tisch 27 angeordnet ist, ist dieser mittels einer Linearführung 28 in der ersten Horizontalrichtung Z beweglich an dem zweiten 24 oder dritten 26 Schlitten abgestützt.

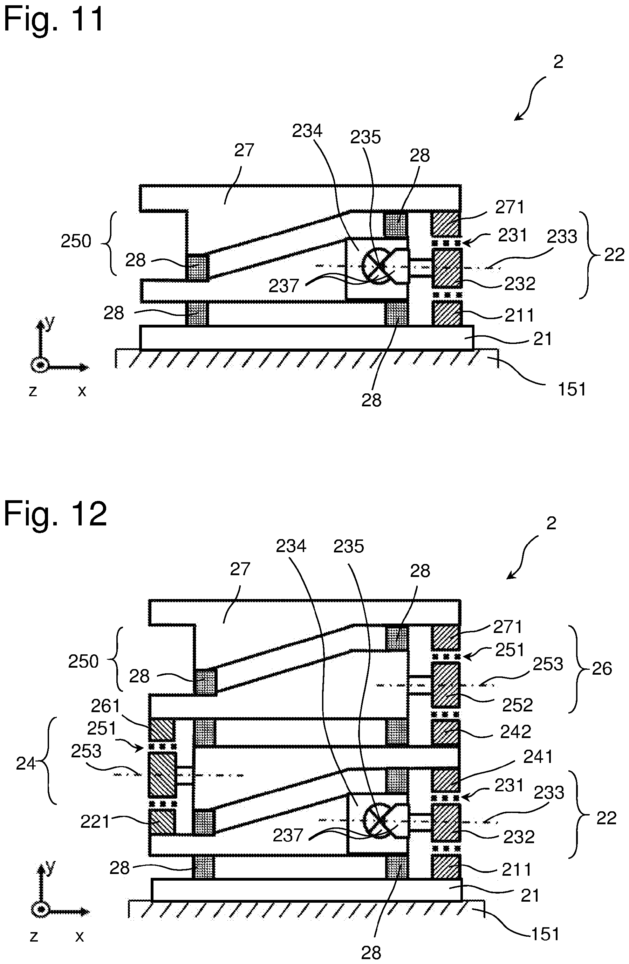

**Fig. 11** zeigt in einer Seitenansicht ein - zum ersten Ausführungsbeispiel (siehe Fig. 5 bis 9) analoges - drittes Ausführungsbeispiel eines Teleskopantriebs 2 einer der Kabinen 15.

Dazu korrespondierend zeigt **Fig. 12** in einer Seitenansicht ein - zum zweiten Ausführungsbeispiel (siehe Fig. 10) analoges - viertes Ausführungsbeispiel eines kaskadiert ausgebildeten Teleskopantriebs 2 einer der Kabinen 15.

Anders als beim ersten und zweiten Ausführungsbeispiel, bei welchen die Welle 235 des Elektromotors 234 fluchtend zur Drehachse 233 eines elektromotorisch angetriebenen Zahnriemenrades 232 angeordnet, ist beim dritten und vierten Ausführungsbeispiel die Welle 235 des Elektromotors 234 unter einem Winkel von insb. 90° und Zwischenschaltung von den Winkel ausgleichenden Umlenkmitteln wie insb. Kegelzahnrädern 237 zur Drehachse 233 eines elektromotorisch angetriebenen Zahnriemenrades 232 angeordnet.

Die Anordnung des Elektromotors 234 unter einem Winkel von insb. 90° zur Drehachse 233 des anzutreibenden Zahnriemenrades 232 des Zahnriemenantriebs 23 erlaubt es, zumindest den motortragenden Schlitten 22 auf der dem Elektromotor 234 gegenüberliegenden Seite bezüglich seiner vertikalen Erstreckung verjüngt auszubilden und schafft schließlich vorteilhaft wertvollen Bauraum 250 insb. auf der motorabgewandten Seite für die beim bevorzugt kaskadierten Aufbau eines Teleskopantriebs 40 erforderlichen Zahnriementriebe 25. Analog können alternativ oder kumulativ dazu alle ggf. vorhandenen weiteren Schlitten 24, 26 an ihrer dem jeweiligen Zahnriementrieb 25 gegenüberliegenden Seite in ihrer vertikalen Erstreckung ebenfalls verjüngt ausgebildet sein, um auf diese Weise vorteilhaft die kompakte Bauweise des Teleskopantriebs 2 weiter zu erhöhen.

Zusammenfassend stellt die vorliegende Erfindung einen Teleskopantrieb 2, ein diesen umfassendes Regalbediengerät 1 sowie ein Betriebsverfahren und eine Verwendung hierfür bereit, mit einer Basis 21, welche 21 eine fest angebundene, in einer ersten Horizontalrichtung Z verlaufende Zahnstange 211 umfasst; und mit wenigstens einem auf der Basis 21 angeordneten ersten Schlitten 22, welcher 22 mittels einer Linearführung 28 in der ersten Horizontalrichtung Z beweglich an der Basis 21 abgestützt ist; und welcher 22 einen Zahnriemenantrieb 23 aus zumindest einem Elektromotor 234 und einem damit 234 angetriebenen, umlaufenden Zahnriemen 231, der in der ersten Horizontalrichtung Z gespannt und auf der Zahnstange 211 der Basis 21 aufgesetzt ist, umfasst.

Durch Integration des Teleskopantriebs 2 in eine, innerhalb einer dreidimensionalen Fächermatrix 13 einer Gerätegerüsts 11 elektromotorisch verfahrbaren Kabine 15, sind nicht nur ein kompakter Aufbau sondern Bewegungen eines Lagerguts 4, die bis oder bevorzugt auch über die Erstreckung eines einzelnen Lagerfachs 32 hinausgehen und damit eine Übergabe des Lagerguts 4 zu einem anderen Regalbediengerät 1 in einer benachbarten parallelen Lagergasse 31, ermöglicht.

In der bevorzugt übergreifenden Ausgestaltung kann somit Lagergut 4 vorteilhaft über eine Reihe von Lagerfächern 32 hinweg übergeben und die Geschwindigkeit der Verteilung von Lagergütern 4, also deren Umschlag in einem Hochregallager 3 vorteilhaft erhöht werden.

Durch Erhöhung der Zahl der zeitgleich in einem Regalbediengerät 1 bewegten Kabinen 15 lassen sich schließlich der Umschlag von Lagergütern 4 pro Zeiteinheit und/oder die Lagerkapazität des Hochregallagers 3 bei gleichem Platzbedarf im Bedarfsfall zumindest zeitweise erhöhen.

### Bezugszeichenliste

- 1: Regalbediengerät
- 11: Gerätegerüst
- 12: Gerüstfach
- 13: dreidimensionale Fächermatrix aus Gerüstfächern 12
- 14: Ladefach
- 15: Kabine
151 Kabinenboden

- 2: Teleskopantrieb
- 21: Basis
211 Zahnstange der Basis 21
- 22: Erster Schlitten
221 Zahnstange des ersten Schlittens 22
- 23: Zahnriemenantrieb
231 Zahnriemen
232 Zahnriemenräder
233 Drehachse der Zahnriemenräder 232
234 Elektromotor
235 Welle
236 Energieführungskette
237 Kegelzahnrad
238 Stromspeicher
239 Stromleitung
- 24: Zweiter Schlitten
241 Erste Zahnstange des zweiten Schlittens 24
242 Zweite Zahnstange des zweiten Schlittens 24
- 25: Zahnriementrieb
250 Bauraum
251 Zahnriemen
252 Zahnriemenräder
253 Drehachse der Zahnriemenräder 252
26 Dritter Schlitten
261 Zahnstange des dritten Schlittens 26
27 Tisch
271 Zahnstange des Tisches 27
28 Linearführung

- 3: Hochregallager
31 Lagergerüst des Hochregallagers 3
311 Erste Seite
312 Zweite Seite
313 Stirnseite
32 Lagerfach
321 Lagerfachboden
322 Strebe
33 Lagergasse
34 Förderband
35 Roboter
36 dreidimensionale Fächermatrix aus Lagerfächern 32

- 4: Lagergut
41 Container
411 Containerkörper
412 Containerkufe
413 Aussparung

- Z: Erste Horizontalrichtung
- X: Zweite Horizontalrichtung
- Y: Vertikalrichtung
- L: Länge der Basis 21
- Vz: Verfahrbewegung in ersten Horizontalrichtung Z
- Vx: Verfahrbewegung in zweiter Horizontalrichtung X
- Vy: Verfahrbewegung in Vertikalrichtung Y

## Patentansprüche

1. Teleskopantrieb (2), insbesondere eines Regalbediengeräts (1),
- mit einer Basis (21),
- wobei die Basis (21) eine fest angebundene und in einer ersten Horizontalrichtung (Z) verlaufende Zahnstange (211) der Basis (21) umfasst;
- und mit wenigstens einem auf der Basis (21) angeordneten ersten Schlitten (22),
- wobei der erste Schlitten (22) mittels einer Linearführung (28) in der ersten Horizontalrichtung (Z) beweglich an der Basis (21) abgestützt ist,
- **dadurch gekennzeichnet, dass** der erste Schlitten (22) einen Zahnriemenantrieb (23) aus zumindest
- einem Elektromotor (234)
und
- einem mittels des Elektromotors (234) angetriebenen, umlaufenden und zumindest außenverzahnten Zahnriemen (231), der in der ersten Horizontalrichtung (Z) gespannt und auf der Zahnstange (211) der Basis (21) aufgesetzt ist,
umfasst.

2. Teleskopantrieb (2) nach Anspruch 1 **dadurch gekennzeichnet,**
- **dass** auf dem ersten Schlitten (22) ein Tisch (27) angeordnet ist, der mittels einer Linearführung (28) in der ersten Horizontalrichtung (Z) beweglich an dem ersten Schlitten (22) abgestützt ist,
und an dem eine in der ersten Horizontalrichtung (Z) verlaufende Zahnstange (271) des Tisches (27) fest angebunden ist, die auf dem Zahnriemen (231) des Zahnriemenantriebs (23) aufgesetzt ist.

3. Teleskopantrieb (2) nach Anspruch 1 **dadurch gekennzeichnet,**
- **dass** zwischen dem ersten Schlitten (22) und einem Tisch (27) wenigstens ein zweiter Schlitten (24) angeordnet ist, der mittels einer Linearführung (28) in der ersten Horizontalrichtung (Z) beweglich an dem ersten Schlitten (22) abgestützt ist,
- **dass** der erste Schlitten (22) an seiner dem Zahnriemenantrieb (23) gegenüberliegenden Seite eine fest angebundene und in der ersten Horizontalrichtung (Z) verlaufende Zahnstange (221) umfasst,
- und **dass** der zweite Schlitten (24) einen Zahnriementrieb (25) aus zumindest einem umlaufenden und zumindest außenverzahnten Zahnriemen (251) umfasst, der in der ersten Horizontalrichtung (Z) gespannt und auf der Zahnstange (221) des ersten Schlittens (22) aufgesetzt ist.

4. Teleskopantrieb (2) nach Anspruch 3, **dadurch gekennzeichnet,**
- **dass** zwischen dem zweiten Schlitten (24) und dem Tisch (27) ein dritter Schlitten (26) angeordnet ist, der mittels einer Linearführung (28) in der ersten Horizontalrichtung (Z) beweglich an dem zweiten Schlitten (24) abgestützt ist,
- **dass** der zweite Schlitten (24) an seiner dem Zahnriementrieb (25) gegenüberliegenden Seite eine fest angebundene und in der ersten Horizontalrichtung (Z) verlaufende Zahnstange (242) umfasst,
- **dass** der dritte Schlitten (26) einen Zahnriementrieb (25) aus zumindest einem umlaufenden und zumindest außenverzahnten Zahnriemen (251) umfasst, der in der ersten Horizontalrichtung (Z) gespannt und auf der Zahnstange (242) des zweiten Schlittens (24) aufgesetzt ist,
- und **dass** an dem dritten Schlitten (26) eine in der ersten Horizontalrichtung (Z) verlaufende Zahnstange (261) fest angebunden ist, die auf dem Zahnriemen (251) des Zahnriementriebes (25) des zweiten Schlittens (24) aufgesetzt ist.

5. Teleskopantrieb (2) nach Anspruch 3 oder 4, **dadurch gekennzeichnet**
- **dass** auf dem zweiten (24) oder dritten (26) Schlitten ein Tisch (27) angeordnet ist, der mittels einer Linearführung (28) in der ersten Horizontalrichtung (Z) beweglich an dem zweiten (24) oder dritten (26) Schlitten abgestützt ist,
und an dem eine in der ersten Horizontalrichtung (Z) verlaufende Zahnstange (271) des Tisches (27) fest angebunden ist, die auf dem Zahnriemen (251) des Zahnriementriebs (25) des zweiten (24) oder dritten (26) Schlittens aufgesetzt ist.

6. Teleskopantrieb (2) nach einem der vorherigen Ansprüche, **dadurch gekennzeichnet, dass** der oder die Zahnriemen (231, 251) doppeltverzahnt ausgebildet sind.

7. Teleskopantrieb (2) nach einem der vorherigen Ansprüche, **dadurch gekennzeichnet, dass** der oder die Zahnriemen (231, 251) jeweils mittels zweier drehbar gelagert Zahnriemenräder (232, 252) gespannt sind und die Drehachse (233, 253) der Zahnriemenräder (232, 252) in einer zweiten Horizontalrichtung (X), insbesondere senkrecht zur ersten Horizontalrichtung (Z), verlaufen.

8. Teleskopantrieb (2) nach einem der vorherigen Ansprüche 1 bis 6 oder 7, **dadurch gekennzeichnet, dass** die Welle (235) des Elektromotors (234) fluchtend oder unter einem Winkel von insb. 90° und Zwischenschaltung von den Winkel ausgleichenden Umlenkmitteln wie insbesondere Kegelzahnrädern (237) zur Drehachse (233) eines elektromotorisch angetriebenen Zahnriemenrades (232) angeordnet ist.

9. Teleskopantrieb (2) nach einem der vorherigen Ansprüche 1 bis 6 oder 7 oder 8, wobei bevorzugt zwei Teleskopantriebe (2) zueinander parallel zu einem Tandem angeordnet sind, **dadurch gekennzeichnet, dass** zumindest der Zahnriemenantrieb (23) eines, vorzugsweise beider, Teleskopantriebe (2) an einer, vorzugsweise gemeinsamen, Welle (235) eines Elektromotors (234), insbesondere über eines der Zahnriemenräder (232), angebunden ist.

10. Teleskopantrieb (2) nach einem der vorherigen Ansprüche, **dadurch gekennzeichnet, dass** sich die Zahnstangen (211, 241; 221, 261; 242, 271) entlang der vollständigen Länge (L) der Basis (21) in der ersten Horizontalrichtung (Z) erstrecken, deren Länge zur Länge der Schlitten (22, 24, 26) in der ersten Horizontalrichtung (Z) korrespondieren.

11. Teleskopantrieb (2) nach einem der vorherigen Ansprüche, **dadurch gekennzeichnet, dass** der oder die Schlitten (22, 24, 26) in der ersten Horizontalrichtung (Z) mittels des oder der Zahnriemen (231, 251) beidseitig der Basis (21), also sowohl in positiver (+Z) als auch in negativer (-Z) ersten Horizontalrichtung, verfahrbar sind.

12. Regalbediengerät (1), insbesondere für ein Hochregallager (3), mit mindestens einer zumindest in einer zweiten Horizontalrichtung (X) und einer Vertikalrichtung (Y) elektromotorisch angetriebenen, in einer dreidimensionalen Fächermatrix (13) des Regalbediengerätes (1) geführten Kabine (15), die zur Aufnahme eines Lagerguts (4) einen Teleskopantrieb (2) nach einem der vorherigen Ansprüche aufweist.

13. Regalbediengerät (1) nach Anspruch 12, **dadurch gekennzeichnet, dass** die Versorgung des Elektromotors (234) des Zahnriemenantriebs (23) des Teleskopantriebs (2) mit Elektrizität mittels wenigstens eines in der Kabine (15) angeordneten wieder-aufladbaren Stromspeichers (238) sichergestellt ist, welcher in gesonderten Ladestationen und/oder bevorzugt
- bei Stillstand der Kabine (15) über wenigstens eine Steckverbindung aus der Stromversorgung des Regalbediengeräts (1)
und/oder
- während der Verfahrbewegungen der Kabine (15) mittels wenigstens eines in Drehung versetzten Dynamos, vorzugsweise mittels wenigstens eines in einer der Laufrollen der Kabine (15) angeordneten Nabendynamos, aufgeladen wird.

14. Verfahren zum Betrieb eines Regalbediengeräts (1) nach Anspruch 12 oder 13, **dadurch gekennzeichnet, dass** eine Verfahrbewegung (Vy) der Kabine (15) in Vertikalrichtung (Y) ein Aufnehmen oder Absetzen des Lagerguts (4) mittels eines das Lagergut (4) hinreichend untergreifenden Teleskopantriebs (2) bewirkt.

15. Verwendung eines Regalbediengeräts (1) nach Anspruch 12 oder 13, **dadurch gekennzeichnet, dass** das Regalbediengerät (1) eine Vielzahl an Kabinen (15) umfasst, welche zumindest ein temporäres Zwischenlagern von Lagergut (4) im Regalbediengerät (1) gestatten.

## Claims

1. Telescopic drive (2), in particular of a storage and retrieval unit (1),
- having a base (21),
- wherein the base (21) comprises a firmly attached toothed rack (211), extending in a first horizontal direction (Z), of the base (21);
- and having at least one first carriage (22) arranged on the base (21),
- wherein the first carriage (22) is supported on the base (21) so as to be movable in the first horizontal direction (Z) by means of a linear guide (28),
- **characterized in that** the first carriage (22) comprises a toothed-belt drive (23) made up of at least
- an electric motor (234)
and
- a circulating and at least externally toothed toothed belt (231) that is driven by means of the electric motor (234), is tensioned in the first horizontal direction (Z) and is positioned on the toothed rack (211) of the base (21).

2. Telescopic drive (2) according to Claim 1, **characterized**
- **in that**, on the first carriage (22), a table (27) is arranged, which is supported on the first carriage (22) so as to be movable in the first horizontal direction (Z) by means of a linear guide (28),
and to which a toothed rack (271), extending in the first horizontal direction (Z), of the table (27) is firmly attached, said toothed rack (271) being positioned on the toothed belt (231) of the toothed-belt drive (23).

3. Telescopic drive (2) according to Claim 1, **characterized**
- **in that**, between the first carriage (22) and a table (27), at least one second carriage (24) is arranged, which is supported on the first carriage (22) so as to be movable in the first horizontal direction (Z) by means of a linear guide (28),
- **in that** the first carriage (22) comprises, on its opposite side from the toothed-belt drive (23), a firmly attached toothed rack (221) extending in the first horizontal direction (Z),
- and **in that** the second carriage (24) comprises a toothed-belt drive (25) made up of at least one circulating and at least externally toothed toothed belt (251) which is tensioned in the first horizontal direction (Z) and is positioned on the toothed rack (221) of the first carriage (22) .

4. Telescopic drive (2) according to Claim 3, **characterized**
- **in that**, between the second carriage (24) and the table (27), a third carriage (26) is arranged, which is supported on the second carriage (24) so as to be movable in the first horizontal direction (Z) by means of a linear guide (28),
- **in that** the second carriage (24) comprises, on its opposite side from the toothed-belt drive (25), a firmly attached toothed rack (242) extending in the first horizontal direction (Z),
- **in that** the third carriage (26) comprises a toothed-belt drive (25) made up of at least one circulating and at least externally toothed toothed belt (251) which is tensioned in the first horizontal direction (Z) and is positioned on the toothed rack (242) of the second carriage (24),
- and **in that** a toothed rack (261) extending in the first horizontal direction (Z) is firmly attached to the third carriage (26), said toothed rack (261) being positioned on the toothed belt (251) of the toothed-belt drive (25) of the second carriage (24).

5. Telescopic drive (2) according to Claim 3 or 4, **characterized**
- **in that**, on the second (24) or third (26) carriage, a table (27) is arranged, which is supported on the second (24) or third (26) carriage so as to be movable in the first horizontal direction (Z) by means of a linear guide (28),
and to which a toothed rack (271), extending in the first horizontal direction (Z), of the table (27) is firmly attached, said toothed rack (271) being positioned on the toothed belt (251) of the toothed-belt drive (25) of the second (24) or third (26) carriage.

6. Telescopic drive (2) according to one of the preceding claims, **characterized in that** the toothed belt(s) (231, 251) are formed in a double-toothed manner.

7. Telescopic drive (2) according to one of the preceding claims, **characterized in that** the toothed belt(s) (231, 251) are each tensioned by means of two rotatably mounted toothed-belt wheels (232, 252), and the axes of rotation (233, 253) of the toothed-belt wheels (232, 252) extend in a second horizontal direction (X), in particular perpendicular to the first horizontal direction (Z).

8. Telescopic drive (2) according to one of the preceding Claims 1 to 6 or 7, **characterized in that** the shaft (235) of the electric motor (234) is arranged in an aligned manner or at an angle of in particular 90° to the axis of rotation (233) of an electromotively driven toothed-belt wheel (232), with angle-compensating deflection means such as in particular bevel gears (237) being interposed.

9. Telescopic drive (2) according to one of the preceding Claims 1 to 6 or 7 or 8, wherein preferably two telescopic drives (2) are arranged parallel to one another to form a tandem, **characterized in that** at least the toothed-belt drive (23) of one, preferably both, of the telescopic drives (2) is attached to a, preferably common, shaft (235) of an electric motor (234), in particular via one of the toothed-belt wheels (232).

10. Telescopic drive (2) according to one of the preceding claims, **characterized in that** the toothed racks (211, 241; 221, 261; 242, 271) extend along the entire length (L) of the base (21) in the first horizontal direction (Z), the length of which corresponds to the length of the carriages (22, 24, 26) in the first horizontal direction (Z).

11. Telescopic drive (2) according to one of the preceding claims, **characterized in that** the carriage(s) (22, 24, 26) are movable in the first horizontal direction (Z) by means of the toothed belt(s) (231, 251) on both sides of the base (21), i.e. both in a positive (+Z) and in a negative (-Z) first horizontal direction.

12. Storage and retrieval unit (1), in particular for a high-bay warehouse (3), having at least one cab (15) that is electromotively driven at least in a second horizontal direction (X) and a vertical direction (Y) and is guided in a three-dimensional compartment matrix (13) of the storage and retrieval unit (1), said cab (15) having a telescopic drive (2) according to one of the preceding claims for picking up a storage item (4).

13. Storage and retrieval unit (1) according to Claim 12, **characterized in that** the supply of the electric motor (234) of the toothed-belt drive (23) of the telescopic drive (2) with electricity is ensured by means of at least one rechargeable power storage device (238) arranged in the cab (15), said rechargeable power storage device (238) being charged in separate charging stations and/or preferably,
- with the cab (15) at a standstill, from the power supply of the storage and retrieval unit (1) via at least one plug connection,
and/or,
- during the travel movements of the cab (15), by means of at least one dynamo set into rotation, preferably by means of at least one hub dynamo arranged in one of the rollers of the cab (15).

14. Method for operating a storage and retrieval unit (1) according to Claim 12 or 13, **characterized in that** a travel movement (Vy) of the cab (15) in a vertical direction (Y) causes the storage item (4) to be picked up or set down by means of a telescopic drive (2) that engages sufficiently beneath the storage item (4).

15. Use of a storage and retrieval unit (1) according to Claim 12 or 13, **characterized in that** the storage and retrieval unit (1) comprises a multiplicity of cabs (15), which allow at least temporary storage of storage items (4) in the storage and retrieval unit (1).

## Revendications

1. Entraînement télescopique (2), en particulier d'un transtockeur (1),
- comprenant une base (21),
- la base (21) comportant une crémaillère (211), reliée fixement et s'étendant dans une première direction horizontale (Z), de la base (21) ;
- et comprenant au moins un premier chariot (22) disposé sur la base (21),
- le premier chariot (22) étant supporté sur la base (21) de manière mobile dans la première direction horizontale (Z) au moyen d'un guide linéaire (28),
- **caractérisé en ce que**
le premier chariot (22) comporte un entraînement à courroie dentée (23)
constitué d'au moins
- un moteur électrique (234)
et
- d'une courroie dentée (231) entraînée au moyen du moteur électrique (234), rotative et au moins à denture extérieure, laquelle courroie dentée est tendue dans la première direction horizontale (Z) et placée sur la crémaillère (211) de la base (21).

2. Entraînement télescopique (2) selon la revendication 1, **caractérisé en ce**
- **qu'**une table (27) est disposée sur le premier chariot (22), laquelle table est supportée sur le premier chariot (22) de manière mobile dans la première direction horizontale (Z) au moyen d'un guide linéaire (28),
et à laquelle est reliée fixement une crémaillère (271), s'étendant dans la première direction horizontale (Z), de la table (27), laquelle crémaillère est placée sur la courroie dentée (231) de l'entraînement à courroie dentée (23).

3. Entraînement télescopique (2) selon la revendication 1, **caractérisé en ce**
- **qu'**au moins un deuxième chariot (24) est disposé entre le premier chariot (22) et une table (27), lequel deuxième chariot est supporté sur le premier chariot (22) de manière mobile dans la première direction horizontale (Z) au moyen d'un guide linéaire (28),
- en ce que le premier chariot (22) comporte, sur son côté opposé à l'entraînement à courroie dentée (23), une crémaillère (221) reliée fixement et s'étendant dans la première direction horizontale (Z),
- et en ce que le deuxième chariot (24) comporte un entraînement à courroie dentée (25) constitué d'au moins une courroie dentée (251) rotative et au moins à denture extérieure, qui est tendue dans la première direction horizontale (Z) et placée sur la crémaillère (221) du premier chariot (22).

4. Entraînement télescopique (2) selon la revendication 3, **caractérisé en ce**
- **qu'**un troisième chariot (26) est disposé entre le deuxième chariot (24) et la table (27), lequel troisième chariot est supporté sur le deuxième chariot (24) de manière mobile dans la première direction horizontale (Z) au moyen d'un guide linéaire (28),
- en ce que le deuxième chariot (24) comporte, sur son côté opposé à l'entraînement à courroie dentée (25), une crémaillère (242) reliée fixement et s'étendant dans la première direction horizontale (Z),
- en ce que le troisième chariot (26) comporte un entraînement à courroie dentée (25) constitué d'au moins une courroie dentée (251) rotative et au moins à denture extérieure, qui est tendue dans la première direction horizontale (Z) et placée sur la crémaillère (242) du deuxième chariot (24),
- et en ce qu'une crémaillère (261) s'étendant dans la première direction horizontale (Z) est reliée fixement au troisième chariot (26), laquelle crémaillère est placée sur la courroie dentée (251) de l'entraînement à courroie dentée (25) du deuxième chariot (24).

5. Entraînement télescopique (2) selon la revendication 3 ou 4, **caractérisé en ce**
- **qu'**une table (27) est disposée sur le deuxième (24) ou le troisième (26) chariot, laquelle table est supportée sur le deuxième (24) ou le troisième (26) chariot de manière mobile dans la première direction horizontale (Z) au moyen d'un guide linéaire (28),
et à laquelle est reliée fixement une crémaillère (271), s'étendant dans la première direction horizontale (Z), de la table (27), laquelle crémaillère est placée sur la courroie dentée (251) de l'entraînement à courroie dentée (25) du deuxième (24) ou du troisième (26) chariot.

6. Entraînement télescopique (2) selon l'une des revendications précédentes, **caractérisé en ce que** la ou les courroies dentées (231, 251) sont à double denture.

7. Entraînement télescopique (2) selon l'une des revendications précédentes, **caractérisé en ce que** la ou les courroies dentées (231, 251) sont tendues respectivement au moyen de deux roues à courroie dentée (232, 252) montées rotatives et les axes de rotation (233, 253) des roues à courroie dentée (232, 252) s'étendent dans une deuxième direction horizontale (X), en particulier perpendiculairement à la première direction horizontale (Z).

8. Entraînement télescopique (2) selon l'une des revendications 1 à 6 ou 7, **caractérisé en ce que** l'arbre (235) du moteur électrique (234) est disposé, par rapport à l'axe de rotation (233) d'une roue à courroie dentée (232) entraînée par moteur électrique, de manière alignée ou suivant un angle de 90° en particulier et par l'intermédiaire de moyens de renvoi compensant l'angle comme en particulier des roues dentées coniques (237).

9. Entraînement télescopique (2) selon l'une des revendications 1 à 6 ou 7 ou 8, de préférence deux entraînements télescopiques (2) étant disposés parallèlement l'un à l'autre en tandem, **caractérisé en ce qu'**au moins l'entraînement à courroie dentée (23) d'un entraînement télescopique, de préférence des deux entraînements télescopiques (2), est relié à un arbre (235), de préférence commun, d'un moteur électrique (234), en particulier par le biais de l'une des roues à courroie dentée (232).

10. Entraînement télescopique (2) selon l'une des revendications précédentes, **caractérisé en ce que** les crémaillères (211, 241 ; 221, 261 ; 242, 271) s'étendent le long de toute la longueur (L) de la base (21) dans la première direction horizontale (Z), dont la longueur correspond à la longueur des chariots (22, 24, 26) dans la première direction horizontale (Z).

11. Entraînement télescopique (2) selon l'une des revendications précédentes, **caractérisé en ce que** le ou les chariots (22, 24, 26) sont déplaçables dans la première direction horizontale (Z) au moyen de la ou des courroies dentées (231, 251) des deux côtés de la base (21), à savoir à la fois dans une première direction horizontale positive (+Z) et dans une première direction horizontale négative (-Z).

12. Transtockeur (1), en particulier pour un entrepôt à rayonnages hauts (3), comportant au moins une cabine (15) entraînée par moteur électrique au moins dans une deuxième direction horizontale (X) et une direction verticale (Y), et guidée dans une matrice de compartiments (13) tridimensionnelle du transtockeur (1), laquelle cabine comprend, pour la réception d'un produit à stocker (4), un entraînement télescopique (2) selon l'une des revendications précédentes.

13. Transtockeur (1) selon la revendication 12, **caractérisé en ce que** l'alimentation du moteur électrique (234) de l'entraînement à courroie dentée (23) de l'entraînement télescopique (2) en électricité est assurée au moyen d'au moins un accumulateur de courant (238) rechargeable disposé dans la cabine (15), lequel est chargé dans des postes de charge séparés et/ou de préférence
- à l'arrêt de la cabine (15) par le biais d'au moins une liaison enfichable à partir de l'alimentation en courant du transtockeur (1)
et/ou
- pendant les mouvements de déplacement de la cabine (15) au moyen d'au moins une dynamo mise en rotation, de préférence au moyen d'au moins une dynamo de moyeu disposée dans l'une des roulettes de la cabine (15) .

14. Procédé de fonctionnement d'un transtockeur (1) selon la revendication 12 ou 13, **caractérisé en ce qu'**un mouvement de déplacement (V_{y}) de la cabine (15) dans la direction verticale (Y) provoque une réception ou une dépose du produit à stocker (4) au moyen d'un entraînement télescopique (2) venant en prise par le dessous suffisamment avec le produit à stocker (4).

15. Utilisation d'un transtockeur (1) selon la revendication 12 ou 13, **caractérisée en ce que** le transtockeur (1) comporte une pluralité de cabines (15), lesquelles permettent au moins un stockage intermédiaire temporaire de produit à stocker (4) dans le transtockeur (1) .
